# EUROPÄISCHE PATENTSCHRIFT

(11) **EP 2 507 523 B1**
(45) Veröffentlichungstag und Bekanntmachung des Hinweises auf die Patenterteilung: **04.06.2014**
(21) Anmeldenummer: 10784796.4
(22) Anmeldetag: 30.11.2010
(51) Int. Cl.: F16C 19/18, F16C 33/40, F16C 19/50, F16C 19/56

(54) **KUGELLAGERANORDNUNG**
BALL BEARING ARRANGEMENT
AGENCEMENT DE ROULEMENT À BILLES

(30) Priorität: 05.12.2009 DE 102009057192
(43) Veröffentlichungstag der Anmeldung: 10.10.2012
(73) Patentinhaber: Schaeffler Technologies GmbH & Co. KG, 91074 Herzogenaurach (DE)
(72) Erfinder: FELIS, Norbert, 97422 Schweinfurt (DE)
(86) Internationale Anmeldenummer: PCT/EP2010/068531
(87) Internationale Veröffentlichungsnummer: WO 2011/067253

(56) Entgegenhaltungen:
- EP-A1- 1 361 373
- DE-A1-102006 031 956
- US-A- 5 387 041
- US-A- 5 906 441

## Beschreibung

### Gebiet der Erfindung

Die Erfindung betrifft eine mehrreihige Kugellageranordnung.

Obwohl auf beliebige Lager und Lageranordnungen anwendbar, werden die vorliegende Erfindung sowie die ihr zugrunde liegende Problematik nachfolgend in Bezug auf ein Schrägkugellager näher erläutert.

Für eine hohe Tragfähigkeit kann im Bereich einer Lagerstelle einer Welle ein mehrreihiges Schrägkugellager zum Einsatz kommen. Bei diesem sind zwischen einem inneren und einem äußeren Lagerring mehrere Kugelreihen angeordnet, welche die wirkenden axialen und radialen Lasten aufnehmen können. Stattdessen können für eine hohe Tragfähigkeit auch mehrere einreihige Schrägkugellager mit jeweils einer Kugelreihe koaxial direkt hintereinander angeordnet werden.

Ein mehrreihiges Schrägkugellager ist zum Beispiel in der DE 60 2005 003 458 T2 beschrieben. Für jede der beiden Kugelreihen des dort beschriebenen Lagers ist ein Käfig zur Führung der Kugeln vorgesehen. Weil ein ausreichender Abstand zwischen den beiden Lagerkäfigen erforderlich ist, um eine Berührung zwischen diesen zu verhindern, muss das in der DE 60 2005 003 458 T2 beschriebene mehrreihige Schrägkugellager eine gewisse Baugröße entlang seiner axialen Richtung besitzen. Eine Verminderung der axialen Ausdehnung und des Gewichts des Lagers und eine Reduzierung des dafür erforderlichen Einbauraums in einem Gehäuse werden dadurch erschwert.

Des Weiteren ist aus der DE 10 2006 031956 A1 ein zweireihiges Kugellager bekannt. Das zweireihige Kugellager weist einen Innenring mit zwei Innenlaufbahnen und einen Außenring mit zwei Außenlaufbahnen auf, zwischen denen eine erste und eine zweite Reihe von Lagerkugeln abwälzen. Das zweireihige Kugellager zeichnet sich dadurch aus, dass die erste Reihe der Lagerkugeln einem Vierpunkt-Kugellager zugeordnet ist, wobei der Innenring im Laufbahnbereich quer zu einer Lagerachse geteilt ausgebildet ist.

In der EP 1 361 373 A1 ist ein zweireihiges Schrägkugellager beschrieben, welches einen Außenring und einen Innenring aufweist, an deren Schultern sich in je einem Käfig geführte Lagerkugeln abstützen, wobei der Durchmesser der Kugellaufbahnen unterschiedlich groß ist. Die beiden Käfige sind als Fensterkäfige aus einem Kunststoff mit die Lagerkugeln ausnehmenden Taschen ausgebildet. Einer der Käfige ist an seinem axial nach innen gerichteten Ende mit mehreren gleichmäßig in Umfangsrichtung voneinander beabstandeten Abstandshaltern und mehreren gleichmäßig in Umfangsrichtung voneinander beabstandeten Haltenasen versehen, die in eine zugehörige Nut des Innenrings oder Außenringes eingreifen. Die Abstandshalter des einen Käfigs verhindern ein axiales Verschieben des anderen Käfigs.

Weiter ist aus der US 5,906,441 A ein Kugelrollenlager mit einem Außenring und einem Innenring bekannt, und dazwischen angeordneten Kugeln. Des Weiteren ist ein Käfig mit mehreren offenen Taschen vorgesehen zum Halten der Kugeln.

Außerdem ist aus der US 5,387,041 A eine Trenneinrichtung aus Kunststoff für Kugeln eines Kugellagers bekannt. Dabei wird jede Kugel zwischen einem Paar von hakenförmigen Fingern der Trenneinrichtung aufgenommen.

Die Aufgabe der vorliegenden Erfindung besteht darin, eine mehrreihige Kugellageranordnung bereitzustellen, welche gegenüber vorbekannten Kugellageranordnungen einen verminderten Platzbedarf und eine verminderte Baugröße aufweist.

Diese Aufgabe wird durch eine mehrreihige Kugellageranordnung mit den Merkmalen des Patentanspruchs 1 gelöst.

Demgemäß ist eine mehrreihige Kugellageranordnung mit zumindest einem inneren Lagerring und zumindest einem äußeren Lagerring sowie mit mehreren zwischen dem zumindest einen inneren Lagerring und dem zumindest einen äußeren Lagerring in zumindest einer ersten Kugelreihe und einer der ersten Kugelreihe benachbarten zweiten Kugelreihe angeordneten Kugeln vorgesehen. Der zumindest eine innere und zumindest eine äußere Lagerring sind hierbei koaxial auf einer Längsachse angeordnet. Die mehrreihige Kugellageranordnung weist darüber hinaus einen ersten Käfig zur Führung der Kugeln der ersten Kugelreihe und einen zweiten Käfig zur Führung der Kugeln der zweiten Kugelreihe auf. Hierbei weisen der erste und der zweite Käfig jeweils einen ersten und einen zweiten Käfigseitenring auf. Der erste Käfigseitenring des ersten Käfigs und der zweite Käfigseitenring des zweiten Käfigs sind einander benachbart und zumindest bereichsweise entlang der Längsachse überlappend angeordnet. Der erste und/oder der zweite Käfig weisen jeweils mehrere Stege auf, welche die dem jeweiligen Käfig zugehörigen ersten und zweiten Käfigseitenringe derart verbinden, dass zur Aufnahme der Kugeln Taschen ausgebildet sind, die jeweils durch zwei benachbarte Stege, einen Umfangsabschnitt des ersten Käfigseitenrings und einen Umfangsabschnitt des zweiten Käfigseitenrings begrenzt sind. Im Bereich einer Tasche des ersten und/oder zweiten Käfigs ist eine mit zwei Punkten des ersten Käfigseitenrings und mit einem Punkt des zweiten Käfigseitenrings gebildete Dreipunkt-Schnappeinrichtung zum Halten der Kugel in der Tasche vorgesehen, welche ein Einsetzen der Kugel in die Tasche durch elastische Verformung im Bereich der beiden Punkte des ersten Käfigseitenrings und des einen Punktes des zweiten Käfigseitenrings erlaubt.

Die Idee der vorliegenden Erfindung besteht darin, dass der erste Käfigseitenring des ersten Käfigs und der zweite Käfigseitenring des zweiten Käfigs zur Verminderung der axialen Baugröße einer mehrreihigen Kugellageranordnung derart angeordnet sind, dass sie in einer Richtung entlang der Längsachse zumindest bereichsweise überlappen. Der für die beiden überlappenden Käfigseitenringe benötigte axiale Bauraum entspricht daher nicht der Summe der axialen Erstreckungen beider Käfigseitenringe, sondern ist geringer als diese. Hierdurch wird eine Verringerung der erforderlichen axialen Abmessung der mehrreihigen Kugellageranordnung erreicht, wodurch auch das Gewicht der mehrreihigen Kugellageranordnung verringert werden kann. Zugleich können Lagersitze, auf denen die mehrreihige Kugellageranordnung beispielsweise in einem Gehäuse aufliegt, ebenfalls kleinere Abmessungen aufweisen, wodurch wiederum Material gespart und das Gewicht des Gehäuses vermindert werden kann.

Ferner verfügen die Kugelreihen jeweils über einen eigenen Käfig, was sich vorteilhaft auswirkt, wenn benachbarte Kugelreihen mit unterschiedlichen Drehzahlen umlaufen, wie dies zum Beispiel in bestimmten Belastungszuständen der mehrreihigen Kugellageranordnung vorkommen kann.

Der erste und/oder der zweite Käfig weisen jeweils mehrere Stege auf, welche die dem jeweiligen Käfig zugehörigen ersten und zweiten Käfigseitenringe derart verbinden, dass zur Aufnahme der Kugeln Taschen ausgebildet sind, die jeweils durch zwei benachbarte Stege, einen Umfangsabschnitt des ersten Käfigseitenrings und einen Umfangsabschnitt des zweiten Käfigseitenrings begrenzt sind. Durch die Stege werden einzelne Kugeln einer Kugelreihe während des Betriebs der mehrreihigen Kugellageranordnung voneinander getrennt, so dass ein reibender Kontakt zwischen benachbarten Kugeln vorteilhaft vermieden werden kann.

In einer vorteilhaften Ausgestaltung umschließen die Taschen eine Kugel in einer Ebene durch den Kugelmittelpunkt vollständig. Dadurch können besonders günstige mechanische Eigenschaften der Lagerkäfige mit Blick auf eine ausreichende Belastbarkeit der Käfige bei gleichzeitig geringem Eigengewicht erzielt werden.

Gemäß einer weiteren Ausgestaltung sind der Umfangsabschnitt des ersten Käfigseitenrings und der Umfangsabschnitt des zweiten Käfigseitenrings des ersten und/oder zweiten Käfigs vollständig auf verschiedenen Seiten einer Teilkreisfläche der dem Käfig zugeordneten Kugelreihe angeordnet und berühren die Teilkreisfläche nicht. Eine Teilkreisfläche einer Kugelreihe wird hier und im Folgenden als eine Zylinderfläche verstanden, deren Achse mit der Längsachse übereinstimmt, und die den Teilkreis dieser Kugelreihe beinhaltet. Weil die axiale Ausdehnung der Kugeln einer Kugelreihe im Bereich der Teilkreisfläche dieser Kugelreihe am größten ist, kann ein besonders platzsparender Käfig dadurch erreicht werden, dass die Umfangsabschnitte jeweils vollständig auf einer Seite der Teilkreisfläche angeordnet sind und die Teilkreisfläche nicht berühren. Ferner können die Kugeln dadurch, dass die Umfangsabschnitte vollständig auf verschiedenen Seiten der Teilkreisfläche angeordnet sind, in günstiger Weise von der jeweiligen Tasche umschlossen werden. Somit kann eine schmale Ausführung des Käfigs und damit zugleich auch ein geringer Platzbedarf der Kugellageranordnung erreicht werden, und es können geschlossene Taschen für die Kugeln bereitgestellt werden, in denen die Kugeln verliersicher gehalten sind. Gleichzeitig kann die für eine erforderliche Festigkeit des Käfigs benötigte Materialstärke dieser Umfangsabschnitte der Käfigseitenringe gewährleistet werden.

In einer vorteilhaften Ausgestaltung sind die Umfangsabschnitte darüber hinaus nicht in unmittelbarer Nähe zur Teilkreisfläche angeordnet, sondern berühren die Teilkreisfläche auch dann nicht, wenn der Mittelpunkt einer in der Tasche aufgenommenen Kugel sich in Bezug auf die Tasche im Rahmen eines geringfügigen Spiels der Kugel in der Tasche bewegt.

Gemäß einer weiteren vorteilhaften Ausgestaltung sind die Umfangsabschnitte in einer radialen Ebene, welche durch einen Mittelpunkt einer in der Tasche aufgenommenen Kugel verläuft und die Längsachse beinhaltet, außerhalb eines zur Spur der Teilkreisfläche in dieser Ebene symmetrischen Winkelbereichs angeordnet, welcher vom Mittelpunkt einer in der Tasche aufgenommenen Kugel gemessen ist und nach beiden Seiten in Bezug auf die Spur der Teilkreisfläche, mit anderen Worten, radial bezüglich der Längsachse nach innen und nach außen, zumindest 15 Grad, bevorzugt aber zumindest 25 Grad, beträgt. Auf diese Weise wird ein vergleichsweise großer Abstand der Umfangsabschnitte zur Teilkreisfläche erreicht, und die Umfangsabschnitte werden in einem Bereich des Kugelumfangs untergebracht, in welchem die axiale Ausdehnung der Kugel bereits erheblich geringer als auf Höhe des Teilkreises ist. Ein Umgreifen der Kugel durch die Umfangsabschnitte außerhalb der unmittelbaren Umgebung der Teilkreisfläche erlaubt somit eine verringerte Abmessung der Käfige in der axialen Richtung. Durch verringerte Käfigabmessungen wird auch eine Verringerung des Reihenabstandes zwischen den Kugelreihen einer mehrreihigen Kugellageranordnung erheblich erleichtert. Weil jedoch die Größe des Winkelbereiches, außerhalb dessen die Umfangsabschnitte gemäß dieser Ausgestaltung vorteilhaft angeordnet sind, unter anderem durch die genaue Querschnittsgeometrie der Umfangsabschnitte und durch die Geometrie der Lagerringe mitbestimmt wird, sind auch Ausgestaltungen der erfindungsgemäßen mehrreihigen Kugellageranordnung denkbar, bei denen diese Winkelbereiche von den angegebenen Zahlenwerten abweichen.

Gemäß einer weiteren Weiterbildung sind der Umfangsabschnitt des ersten Käfigseitenrings und der Umfangsabschnitt des zweiten Käfigseitenrings des ersten und/oder zweiten Käfigs bezüglich des Mittelpunktes einer Kugel der dem Käfig zugeordneten Kugelreihe im Wesentlichen einander gegenüberliegend angeordnet. Dadurch wird die in der Tasche aufgenommene Kugel durch die beiden Umfangsabschnitte der Käfigseitenringe im Bereich eines Durchmessers umgriffen, was für eine sichere Führung der Kugeln sowie eine verliersichere Aufnahme der Kugeln in den Taschen des Käfigs während der Montage von Vorteil ist.

Gemäß einer weiteren Ausgestaltung sind der Umfangsabschnitt des ersten Käfigseitenrings des ersten Käfigs und der Umfangsabschnitt des zweiten Käfigseitenrings des zweiten Käfigs beide vollständig auf derselben Seite der Teilkreisfläche der ersten Kugelreihe und beide vollständig auf derselben Seite der Teilkreisfläche der zweiten Kugelreihe angeordnet. Damit können beispielsweise bei mehrreihigen Kugellageranordnungen, bei denen der Teilkreis einer Kugelreihe einen deutlich größeren Durchmesser als der Teilkreis einer benachbarten Kugelreihe aufweist, der Umfangsabschnitt des ersten Käfigseitenrings des ersten Käfigs und der Umfangsabschnitt des zweiten Käfigseitenrings des zweiten Käfigs vollständig zwischen den Teilkreisflächen der ersten und der benachbarten zweiten Kugelreihe angeordnet sein, so dass auf diese Weise eine in axialer Richtung besonders platzsparende Anordnung der Käfige möglich wird.

Gemäß einer weiteren Ausgestaltung weist der Teilkreis der zweiten Kugelreihe einen größeren Durchmesser als der Teilkreis der ersten Kugelreihe auf.

In einer Ausgestaltung der mehrreihigen Kugellageranordnung sind die Käfigseitenringe des ersten und des zweiten Käfigs kreisringförmig ausgebildet, und es ist vorgesehen, dass der erste Käfigseitenring des ersten Käfigs einen größeren inneren und äußeren Durchmesser als der zweite Käfigseitenring des ersten Käfigs aufweist und/oder dass der erste Käfigseitenring des zweiten Käfigs einen größeren inneren und äußeren Durchmesser als der zweite Käfigseitenring des zweiten Käfigs aufweist. Im Hinblick auf die Widerstandsfähigkeit des Käfigs gegenüber mechanischen Belastungen und im Hinblick auf eine einfache Herstellbarkeit des Käfigs ist eine kreisringförmige Ausbildung der Käfigseitenringe von Vorteil.

In einer weiteren Ausgestaltung sind der erste Käfigseitenring des ersten Käfigs und der zweite Käfigseitenring des zweiten Käfigs längs ihres gesamten Umfangs in Richtung der Längsachse überlappend angeordnet.

in einer noch weiteren Ausgestaltung weist der erste Käfigseitenring des ersten Käfigs einen inneren Durchmesser auf, welcher größer ist als der äußere Durchmesser des zweiten Käfigseitenrings des zweiten Käfigs. Auf diese Weise kann der erste Käfigseitenring des ersten Käfigs den zweiten Käfigseitenring des zweiten Käfigs entlang des Umfangs derart umgreifen, dass der erste Käfigseitenring des ersten Käfigs und der zweite Käfigseitenring, des zweiten Käfigs überlappen, ohne dass sich der erste und der zweite Käfig berühren.

Gemäß einer Ausgestaltung weisen der erste und/oder der zweite Käfigseitenring eines der Käfige jeweils eine in axialer Richtung von der Mitte der Kugellageranordnung weg weisende axiale Begrenzungsfläche auf, welche im Wesentlichen eben, und insbesondere zu der Längsachse senkrecht ausgebildet ist. Dies ist günstig, um zu vermeiden, dass der jeweilige Käfig über die axialen Enden bzw. Stirnseiten der Lagerringe vorsteht, und gleichzeitig vorteilhaft, um den für die Käfige zur Verfügung stehenden Bauraum auszunutzen.

Gemäß einer vorteilhaften Ausgestaltung der mehrreihigen Kugellageranordnung weist der erste Käfigseitenring des ersten Käfigs eine in Richtung der zweiten Kugelreihe weisende axiale Begrenzungsfläche auf, welche einen Teil einer Torusfläche bildet. Zusätzlich oder alternativ hierzu weist in dieser Ausgestaltung der zweite Käfigseitenring des zweiten Käfigs eine in Richtung der ersten Kugelreihe weisende axiale Begrenzungsfläche auf, welche einen Teil einer anderen Torusfläche bildet. Hierdurch kann der axiale Platzbedarf der mehrreihigen Kugellageranordnung noch weiter verringert werden, weil durch eine derartige Formgebung dieser axialen Begrenzungsflächen der Käfigseitenringe der erste Käfigseitenring des ersten Käfigs und der zweite Käfigseitenring des zweiten Käfigs noch weiter überlappen können, ohne dass der erste Käfigseitenring des ersten Käfigs die Kugeln der zweiten Kugelreihe oder der zweite Käfigseitenring des zweiten Käfigs die Kugeln der ersten Kugelreihe reibend berühren. Damit ist es möglich, den Reihenabstand, gemessen entlang der Längsachse, zwischen einem Mittelpunkt einer Kugel der ersten Kugelreihe und einem Mittelpunkt einer Kugel der zweiten Kugelreihe, weiter zu verringern und so eine mehrreihige Kugellageranordnung mit noch weiter verringertem Bauraum bereitzustellen. Gemäß einer vorteilhaften Ausgestaltung entspricht die axiale Begrenzungsfläche des ersten Käfigseitenrings des ersten Käfigs im Wesentlichen einer von einer Kugel der zweiten Kugelreihe während ihrer Abrollbewegung als Hüllfläche ihrer um ein Spiel, insbesondere um ein geringfügiges Spiel, vergrößerten Kugeloberflächen in sämtlichen ihrer möglichen Positionen erzeugten Torusfläche. Zusätzlich oder alternativ hierzu entspricht gemäß dieser Ausgestaltung die axiale Begrenzungsfläche des zweiten Käfigseitenrings des zweiten Käfigs im Wesentlichen einer von einer Kugel der ersten Kugelreihe während ihrer Abrollbewegung als Hüllfläche ihrer um ein Spiel, insbesondere um ein geringfügiges Spiel, vergrößerten Kugeloberflächen in sämtlichen ihrer möglichen Positionen erzeugten Torusfläche. In dieser Ausgestaltung sind zum einen die Kugeln der zweiten Kugelreihe von der benachbarten axialen Begrenzungsfläche des ersten Käfigseitenrings des ersten Käfigs, und zum anderen die Kugeln der ersten Kugelreihe von der benachbarten axialen Begrenzungsfläche des zweiten Käfigseitenrings des zweiten Käfigs nur durch ein im Vergleich mit dem Querschnitt der Käfigseitenringe geringes Spiel, oder, mit anderen Worten, durch einen Spalt getrennt. Auf diese Weise wird der für den ersten Käfigseitenring des ersten Käfigs und den zweiten Käfigseitenring des zweiten Käfigs in der mehrreihigen Kugellageranordnung verfügbare Platz bestmöglich zur Unterbringung der Käfige ausgenutzt, ohne dass es zu einer zusätzlichen gleitenden und reibenden Beanspruchung der Käfigseitenringe im Bereich ihrer axialen Begrenzungsflächen kommt. Hierdurch kann eine leichtere, gewichtsparende Gestaltung der Käfige erreicht und zugleich deren Lebensdauer vergrößert werden.

Gemäß einer anderen vorteilhaften Ausgestaltung der mehrreihigen Kugellageranordnung weist der erste Käfigseitenring des ersten Käfigs eine in Richtung der zweiten Kugelreihe weisende axiale Begrenzungsfläche auf, welche einen Teil einer Kegelfläche bildet. Zusätzlich oder alternativ hierzu weist in dieser Ausgestaltung der zweite Käfigseitenring des zweiten Käfigs eine in Richtung der ersten Kugelreihe weisende axiale Begrenzungsfläche auf, welche einen Teil einer anderen Kegelfläche bildet. Bevorzugt sind die beiden Kegelflächen, welche die axialen Begrenzungsflächen bilden, koaxial zu der Längsachse angeordnet.

Gemäß einer weiteren Ausgestaltung sind die in Richtung der zweiten Kugelreihe weisende axiale Begrenzungsfläche des ersten Käfigseitenrings des ersten Käfigs und/oder die in Richtung der ersten Kugelreihe weisende axiale Begrenzungsfläche des zweiten Käfigseitenrings des zweiten Käfigs als ebene und bevorzugt im Wesentlichen zur Längsachse senkrecht verlaufende Flächen ausgebildet

Gemäß einer Weiterbildung weist eine Tasche eine einer in der Tasche aufgenommenen Kugel zugewandte Begrenzungsfläche auf, welche aus aneinander anschließenden Abschnitten einer Kugelfläche und Abschnitten einer Zylinderfläche gebildet ist.

Bei einer bevorzugten Ausgestaltung ist die Achse der Zylinderfläche parallel zu der Längsachse ausgerichtet. Die Herstellung eines Käfigs der mehrreihigen Kugellageranordnung kann daher vorteilhaft mit Hilfe eines Spritzgießwerkzeuges erfolgen, welches zur Erzeugung der Taschen für die Kugeln ausschließlich axial bewegliche Formkerne erfordert. Eine kostengünstige Herstellung des Spritzgießwerkzeuges wie auch des Käfigs selbst wird dadurch möglich.

In einer Weiterbildung sind die Radien der aneinander anschließenden Aschnitte von Kugelflächen und Zylinderflächen, welche die der in der Tasche aufgenommenen Kugel zugewandte Begrenzungsfläche der Tasche bilden, gleich.

Im Bereich einer Tasche des ersten und/oder zweiten Käfigs ist eine mit zwei Punkten des ersten Käfigseitenrings und mit einem Punkt des zweiten Käfigseitenrings gebildete Dreipunkt-Schnappeinrichtung zum Halten der Kugel in der Tasche vorgesehen, welche ein Einsetzen der Kugel in die Tasche durch elastische Verformung im Bereich der beiden Punkte des ersten Käfigseitenrings und des einen Punktes des zweiten Käfigseitenrings erlaubt. Dadurch kann eine in die Tasche eingesetzte Kugel sicher in der Tasche gehalten werden, ohne durch die äußere Mantelfläche des Käfigs zu entweichen.

Bei einer weiteren Ausgestaltung sind die beiden Punkte des ersten Käfigseitenrings verschieden und bilden Punkte einer an die Tasche angrenzenden Kante einer äußeren Umfangsfläche des ersten Käfigseitenrings. Weiterhin bildet bei dieser Ausgestaltung der eine Punkt des zweiten Käfigseitenrings einen Punkt einer an die Tasche angrenzenden Kante einer äußeren Umfangsfläche des zweiten Käfigseitenrings, und die beiden Punkte des ersten Käfigseitenrings sowie der eine Punkt des zweiten Käfigseitenrings liegen auf einem Kreis, welcher einen Durchmesser aufweist, der kleiner als der Durchmesser der in der Tasche aufgenommenen Kugel ist.

In einer weiteren Ausgestaltung sind die beiden voneinander verschiedenen Punkte der an die Tasche angrenzenden Kante der äußeren Umfangsfläche des ersten Käfigseitenrings zwei Ecken einer Ausnehmung in dem ersten Käfigseitenring, wobei die Ausnehmung in der äußeren Umfangsfläche des ersten Käfigseitenrings eine kreissegmentartige Form aufweist. Ist der Durchmesser des Kreises durch die beiden Punkte der Kante der äußeren Umfangsfläche des ersten Käfigseitenrings und durch den Punkt der an die Tasche angrenzenden Kante der äußeren Umfangsfläche des zweiten Käfigseitenrings kleiner als der Durchmesser der in der Tasche aufzunehmenden Kugel und geeignet gewählt, so kann die Kugel durch ein geringes elastisches Zurückweichen der Ecken der Ausnehmung in den Innenbereich der Tasche eingesetzt oder, anders ausgedrückt, eingeschnappt werden.

Gemäß einer Weiterbildung ist die mehrreihige Kugellageranordnung als mehrreihiges Schrägkugellager mit einem inneren Lagerring und einem äußeren Lagerring, insbesondere als zweireihiges Tandem-Schrägkugellager, oder als Tandem-Anordnung mehrerer, insbesondere zweier, einreihiger Schrägkugellager ausgebildet. Weil bei einem derartigen Lager die Lagerringborde, welche die Laufbahn, auf der die Kugeln einer Kugelreihe abwälzen, nicht die gleiche Höhe aufweisen, sondern einer der Borde niedriger als der andere ist oder auch ganz fehlen kann, steht bei geeigneter Anordnung der Käfigseitenringe mehr Bauraum für die Käfigseitenringe zur Verfügung. Darüber hinaus kann, in einer Ebene durch den Kugelmittelpunkt, welche die Längsachse beinhaltet, betrachtet, ein größerer Abstand der Umfangsabschnitte der Käfigseitenringe zur Teilkreisfläche der zugeordneten Kugelreihe gewährleistet werden, was wiederum die Möglichkeiten zur Platzeinsparung in axialer Richtung verbessert.

Gemäß einer noch weiteren Ausgestaltung weist eine Kugel der ersten Kugelreihe einen Durchmesser auf, welcher von einem Durchmesser einer Kugel der zweiten Kugelreihe verschieden ist.

Gemäß einer bevorzugten Ausgestaltung ist der Reihenabstand der ersten und der zweiten Kugelreihe, gemessen in Richtung der Längsachse, zwischen den Mittelpunkten einer Kugel der ersten Kugelreihe und einer Kugel der zweiten Kugelreihe, geringer als die Summe der Radien dieser beiden Kugeln. Dadurch wird eine in axialer Richtung besonders schmal bauende mehrreihige Kugellageranordnung erhalten.

Ferner sind die Käfige der mehrreihigen Kugellageranordnung gemäß einer bevorzugten Ausführungsform jeweils einstückig durch Spritzgießen aus einem thermoplastischen Kunststoff gefertigt. Auf diese Weise kann ein besonders geringes Eigengewicht des Käfigs erreicht werden. Auch ist so eine wirtschaftliche Fertigung der Käfige möglich. Gemäß einer vorteilhaften Ausgestaltung kommt als Käfigmaterial ein glasfaserverstärktes Polyamid zur Verwendung.

Die Erfindung wird nachfolgend anhand der in den schematischen Figuren angegebenen Ausführungsbeispiele näher erläutert. Hierbei zeigen:
- Fig. 1: eine Darstellung einer mehrreihigen Kugellageranordnung in einem Längsschnitt durch die Längsachse gemäß einem Ausführungsbeispiel der Erfindung;
- Fig. 2: eine Darstellung eines ersten Käfigs der mehrreihigen Kugellageranordnung gemäß Fig. 1 in einem radial geführten Längsschnitt durch den Mittelpunkt einer in einer Tasche des Käfigs aufgenommenen Kugel;
- Fig. 3: eine Darstellung des ersten Käfigs gemäß Fig. 2 in einem radial geführten Längsschnitt durch die Mitte eines Steges zwischen zwei Taschen des Käfigs;
- Fig. 3a: eine Darstellung eines ersten Käfigs gemäß einem Ausführungsbeispiel mit einer alternativen Ausgestaltung einer seiner axialen Begrenzungsflächen, in einem radial geführten Längsschnitt durch die Mitte eines Steges zwischen zwei Taschen des Käfigs;
- Fig. 3b: eine Darstellung eines ersten Käfigs gemäß einem weiteren Ausführungsbeispiel mit einer anderen alternativen Ausgestaltung einer seiner axialen Begrenzungsflächen, in einem radial geführten Längsschnitt durch die Mitte eines Steges zwischen zwei Taschen des Käfigs;
- Fig. 4: eine perspektivische Ansicht des ersten Käfigs gemäß Fig. 2, in Richtung auf die äußere Mantelfläche des ersten Käfigs zu betrachtet;
- Fig. 5: eine Detailansicht A aus Fig. 4;
- Fig. 6: eine Darstellung eines zweiten Käfigs der mehrreihigen Kugellageranordnung gemäß Fig. 1 in einem radial geführten Längsschnitt durch den Mittelpunkt einer in einer Tasche des Käfigs aufgenommenen Kugel;
- Fig. 7: eine Darstellung des zweiten Käfigs gemäß Fig. 6 in einem radial geführten Längsschnitt durch die Mitte eines Steges zwischen zwei Taschen des Käfigs;
- Fig. 8: eine perspektivische Ansicht des zweiten Käfigs gemäß Fig. 6, in Richtung auf die äußere Mantelfläche des zweiten Käfigs zu betrachtet;
- Fig. 9: eine Detailansicht B aus Fig. 8; und
- Fig. 10: eine Darstellung einer mehrreihigen Kugellageranordnung in einem Längsschnitt gemäß einem weiteren Ausführungsbeispiel der Erfindung.

In den Figuren der Zeichnung sind gleiche und funktionsgleiche Elemente und Merkmale - soweit nichts Anderes angegeben ist - mit denselben Bezugszeichen versehen.

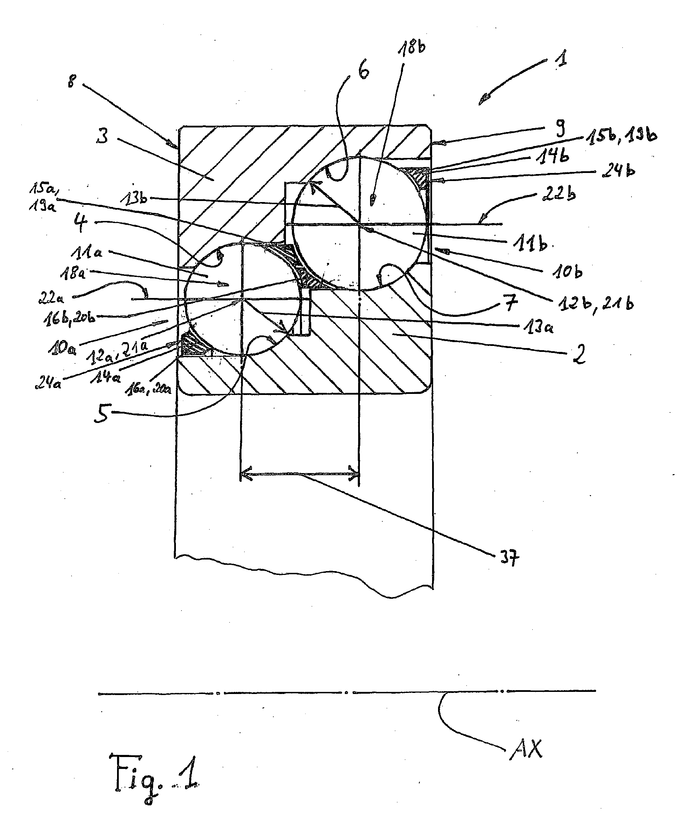

Figur 1 zeigt eine Darstellung eines Ausführungsbeispiels einer mehrreihigen Kugellageranordnung 1 in einem Schnitt durch deren Längsachse AX. Die Längsachse AX gibt nachfolgend auch die axiale Richtung an. Wie in Fig. 1 dargestellt, kann die mehrreihige Kugellageranordnung 1 als ein zweireihiges Schrägkugellager 1 ausgeführt sein. Die mehrreihige Kugellageranordnung 1 gemäß Fig. 1 weist einen äußeren Lagerring 3 und einen zu diesem koaxialen inneren Lagerring 2 auf. Die Längsachse AX bildet die gemeinsame Achse der beiden Lagerringe 2, 3. Der äußere Lagerring 3 ist mit zwei in axialer Richtung AX zueinander versetzten Laufbahnen 4, 6 versehen. Auch der innere Lagerring 2 ist mit zwei Laufbahnen 5, 7 versehen, welche ebenfalls in der axialen Richtung AX zueinander versetzt angeordnet sind. Darüber hinaus sind zwischen den beiden Lagerringen 2, 3 eine Anzahl von Kugeln 11a, 11 b vorgesehen. Die Kugeln 11 a und 11 b sind in zwei Kugelreihen 10a bzw. 10b angeordnet, die in Laufbahnen 5, 7 in dem inneren Lagerring 2 und in Laufbahnen 4, 6 in dem äußeren Lagerring 3 geführt sind. Die Schultern des äußeren Lagerrings 3, welche dessen Laufbahnen 4 und 6 begrenzen, sind jeweils auf der einen Seite der zugehörigen Kugelreihe 10a bzw. 10b höher als auf der anderen Seite ausgebildet. Auch die Schultern des inneren Lagerrings 2, welche die Laufbahnen 5 und 7 begrenzen, sind jeweils auf einer Seite der zugehörigen Kugelreihe 10a bzw. 10b höher als auf der anderen Seite ausgebildet. Bei der mehrreihigen Kugellageranordnung 1, wie sie in Fig. 1 gezeigt ist, sind die die Laufbahnen 4, 5, 6, 7 begrenzenden Schultern darüber hinaus nach Art eines Tandem-Schrägkugellagers ausgebildet, welches eine Übertragung axialer Lasten vom inneren Lagerring 2 auf den äußeren Lagerring 3 an dieser Lagerstelle nur in einer Richtung entlang der Längsachse AX erlaubt. Die mehrreihige Kugellageranordnung 1 wirkt somit einseitig.

In der axialen Richtung AX können die Lagerringe 2, 3 durch zwei Stirnseiten 8 und 9 begrenzt sein. Die Lagerringe 2 und 3 weisen bei dem in Fig. 1 dargestellten Ausführungsbeispiel der mehrreihigen Kugellageranordnung die gleiche axiale Ausdehnung auf.

Die mehrreihige Kugellageranordnung 1 weist eine Teilkreisfläche 22a auf, welche die Gestalt einer Zylinderfläche besitzt, die einen Teilkreis 21a der ersten Kugelreihe 10a der Kugellageranordnung 1 beinhaltet. Darüber hinaus weist die mehrreihige Kugellageranordnung 1 auch eine Teilkreisfläche 22b auf, welche der zweiten Kugelreihe 10b zugeordnet ist, ebenfalls die Gestalt einer Zylinderfläche besitzt und einen Teilkreis 21b der zweiten Kugelreihe 10b der mehrreihigen Kugellageranordnung 1 beinhaltet. Die Längsachse AX bildet auch die Achse der Teilkreisflächen 22a und 22b. Im Fall der Fig. 1 ist der Durchmesser der der ersten Kugelreihe 10a zugeordneten Teilkreisfläche 22a geringer als der Durchmesser der der zweiten Kugelreihe 10b zugeordneten Teilkreisfläche 22b. Ferner ist ein Radius 13a einer Kugel 11a der ersten Kugelreihe 10a geringer als ein Radius 13b einer Kugel 11b der zweiten Kugelreihe 10b.

Die in Fig. 1 gezeigte Schnittebene entspricht einer radialen Ebene, welche die Längsachse AX beinhaltet und durch einen Mittelpunkt 12a der Kugel 11a der ersten Kugelreihe 10a sowie zugleich durch einen Mittelpunkt 12b der Kugel 11b der zweiten Kugelreihe 10b verläuft. In Fig. 1 sind somit zwei in Richtung des Umfangs der Lagerringe 2, 3 zwischen den zugeordneten Laufbahnen rollend bewegliche Kugeln 11a, 11b zur besseren Darstellung derart angeordnet, dass die Mittelpunkte 12a, 12b der beiden Kugeln 11a, 11b in derselben radialen Ebene durch die Längsachse AX zu liegen kommen.

Zur Führung der Kugeln 11a, 11b innerhalb der mehrreihigen Kugellageranordnung 1 und zur Gewährleistung gleichmäßiger Abstände der Kugeln 11a der ersten Kugelreihe 10a und der Kugeln 11b der zweiten Kugelreihe 10b in der Umfangsrichtung der Kugellageranordnung 1 sind ein erster und ein zweiter Käfig 14a, 14b vorgesehen. Der erste Käfig 14a dient zur Führung der Kugeln 11a der ersten Kugelreihe 10a, während der zweite Käfig 14b zur Führung der Kugeln 11b der zweiten Kugelreihe 10b vorgesehen ist. Der innere Lagerring 2, der äußere Lagerring 3, der erste Käfig 14a und der zweite Käfig 14b sind im Wesentlichen koaxial zueinander angeordnet. Beide Käfige 14a, 14b können mit Vorteil im Spritzgießverfahren beispielsweise aus einem glasfaserverstärkten Polyamid gefertigt werden, wodurch belastbare Käfige geringen Gewichts erhalten werden.

Der erste Käfig 14a weist einen ersten Käfigseitenring 15a und einen zweiten Käfigseitenring 16a auf. Die beiden Käfigseitenringe 15a, 16a des ersten Käfigs 14a sind vorzugsweise kreisringförmig ausgebildet, bevorzugt konzentrisch zueinander um die Längsachse AX angeordnet und durch mehrere, in Fig. 1 nicht sichtbare Stege 17a miteinander verbunden, Die Stege 17a können entlang der Umfangsrichtung des ersten Käfigs 14a gleichmäßig verteilt sein. Jeweils zwei benachbarte Stege 17a bilden zusammen mit einem zwischen den beiden Stegen 17a liegenden Umfangsabschnitt 19a des ersten Käfigseitenringes 15a und einem ebenfalls zwischen den beiden Stegen 17a liegenden Umfangsabschnitt 20a des zweiten Käfigseitenringes 16a eine Anzahl von Taschen 18a, welche jeweils eine Kugel 11a der erste Kugelreihe 10a aufnehmen können.

Gleichermaßen weist der zweite Käfig 14b einen ersten Käfigseitenring 15b und einen zweiten Käfigseitenring 16b auf. Auch die beiden Käfigseitenringe 15b, 16b des zweiten Käfigs 14b besitzen vorzugsweise eine Kreisringform, sind bevorzugt konzentrisch zueinander um die Längsachse AX angeordnet und durch mehrere, in Fig. 1 ebenfalls nicht sichtbare Stege 17b miteinander verbunden. Auch die Stege 17b des zweiten Käfigs 14b können entlang der Umfangsrichtung der mehrreihigen Kugellageranordnung 1 gleichmäßig verteilt sein. Zwei benachbarte Stege 17b bilden, ähnlich wie zuvor für den ersten Käfig 14a beschrieben, zusammen mit einem Umfangsabschnitt 19b des ersten Käfigseitenringes 15b und einem Umfangsabschnitt 20b des zweiten Käfigseitenringes 16b Taschen 18b, welche jeweils eine Kugel 11b der zweiten Kugelreihe 10b aufnehmen.

Wie aus Fig. 1 weiterhin ersichtlich wird, sind die beiden Käfige 14a und 14b der mehrreihigen Kugellageranordnung 1 in der Weise innerhalb des zwischen den beiden Lagerringen 2, 3 um die Kugeln 11a, 11b zur Verfügung stehenden Bauraums angeordnet, dass der erste Käfigseitenring 15a des ersten Käfigs 14a und der zweite Käfigseitenring 16b des zweiten Käfigs 14b einander benachbart und entlang der Längsachse AX der mehrreihigen Kugellageranordnung 1 überlappend angeordnet sind. Der erste Käfigseitenring 15a des ersten Käfigs 14a weist bei dem gezeigten Ausführungsbeispiel einen inneren Durchmesser auf, welcher größer ist als der äußere Durchmesser des zweiten Käfigseitenrings 16b des zweiten Käfigs 14b. In dieser Weise kann der erste Käfigseitenring 15a des ersten Käfigs 14a den zweiten Käfigseitenring 16b des zweiten Käfigs 14b entlang dessen Umfangsrichtung umgreifen.

In einer radialen Richtung der mehrreihigen Kugellageranordnung 1, wie sie in Fig. 1 dargestellt ist, betrachtet, kommen der erste Käfigseitenring 15a des ersten Käfigs 14a und der zweite Käfigseitenring 16b des zweiten Käfigs 14b in einem Zwischenraum zwischen den beiden Kugelreihen 10a und 10b nebeneinander zu liegen, wobei sich der erste Käfigseitenring 15a des ersten Käfigs 14a und der zweite Käfigseitenrings 16b des zweiten Käfigs 14b nicht berühren, sondern zwischen beiden ein Spalt verbleibt, welcher ausreicht, um zu gewährleisten, dass die Käfigseitenringe 15a und 16b während des Betriebes der mehrreihigen Kugellageranordnung 1 umlaufen, ohne aneinander anzustehen oder zu reiben. Hierdurch kann sichergestellt werden, dass auch dann, wenn beispielsweise aufgrund einer bestimmten Belastungssituation der in diesem Ausführungsbeispiel als zweireihiges Schrägkugellager ausgebildeten mehrreihigen Kugellageranordnung 1 die erste Kugelreihe 10a mit einer Drehzahl umläuft, welche von einer Umlaufdrehzahl der zweiten Kugelreihe 10b verschieden ist, die Käfige 14a, 14b durch diese Drehzahldifferenz nicht durch zusätzliche Kräfte belastet werden. Die Käfige 14a, 14b können daher bei hoher Lebensdauer vergleichsweise leicht und platzsparend gebaut und mit geringem Materialverbrauch gefertigt werden. Weil durch die wegfallenden Zusatzbelastungen auch die Stege 17a, 17b leichter und platzsparender ausgebildet werden können, kann die Anzahl von Kugeln 11a, 11b je Kugelreihe 10a, 10b gesteigert werden, was sich wiederum auf die Tragfähigkeit der mehrreihigen Kugellageranordnung 1 günstig auswirken kann.

Darüber hinaus sind der Umfangsabschnitt 19a des ersten Käfigseitenrings 15a und der Umfangsabschnitt 20a des zweiten Käfigseitenrings 16a des ersten Käfigs 14a vorzugsweise, in einer Ebene betrachtet, welche durch den Mittelpunkt 12a einer in der Tasche 18a aufgenommenen Kugel 11a der ersten Kugelreihe 10a verläuft und zugleich die Längsachse AX beinhaltet, vollständig auf verschiedenen Seiten der Teilkreisfläche 22a der dem ersten Käfig 14a zugeordneten ersten Kugelreihe 10a angeordnet. Die beiden Umfangsabschnitte 19a und 20a berühren hierbei die Teilkreisfläche 22a nicht. In Fig. 1 ist der Umfangsabschnitt 20a des zweiten Käfigseitenrings 16a des ersten Käfigs 14a somit bevorzugt vollständig radial innerhalb der Teilkreisfläche 22a angeordnet, während der Umfangsabschnitt 19a des ersten Käfigseitenrings 15a vollständig radial außerhalb der Teilkreisfläche 22a angeordnet ist. Beide Umfangsabschnitte 19a und 20a weisen darüber hinaus bei diesem Ausführungsbeispiel in der gezeigten Schnittebene jeweils einen radialen Abstand von der Teilkreisfläche 22a auf, der etwas größer ist als die Querschnittsabmessung des jeweiligen Umfangsabschnitts 19a, 20a in dieser Schnittebene in der radialen Richtung der Kugellageranordnung.

Der Umfangsabschnitt 19b des ersten Käfigseitenrings 15b und der Umfangsabschnitt 20b des zweiten Käfigseitenrings 16b des zweiten Käfigs 14b sind ebenfalls vorzugsweise, in einer Ebene betrachtet, welche durch den Mittelpunkt 12b einer in der Tasche 18b aufgenommenen Kugel 11b verläuft und die Längsachse AX beinhaltet, vollständig auf verschiedenen Seiten einer Teilkreisfläche 22b der dem zweiten Käfig 14b zugeordneten zweiten Kugelreihe 10b angeordnet und berühren die Teilkreisfläche 22b nicht. Wie wiederum in Fig. 1 gezeigt, liegt der Umfangsabschnitt 19b in der gezeigten Schnittebene bevorzugt vollständig radial außerhalb der Teilkreisfläche 22b der zweiten Kugelreihe 10b, während der Umfangsabschnitt 20b vollständig radial innerhalb der Teilkreisfläche 22b der zweiten Kugelreihe 10b angeordnet ist. Auch die beiden Umfangsabschnitte 19b und 20b weisen darüber hinaus in der gezeigten Schnittebene einen radialen Abstand von der Teilkreisfläche 22b auf, der etwas größer ist als die Abmessung des jeweiligen Umfangsabschnitts 19b, 20b in dieser Schnittebene in der radialen Richtung der mehrreihigen Kugellageranordnung 1.

Wie ebenfalls in Fig. 1 gezeigt, sind der Umfangsabschnitt 19a des ersten Käfigseitenrings 15a und der Umfangsabschnitt 20a des zweiten Käfigseitenrings 16a des ersten Käfigs 14a vorzugsweise, wiederum zum Beispiel in der bereits beschriebenen radialen Ebene durch den Mittelpunkt 12a der Kugel 11 a betrachtet, in Bezug auf den Mittelpunkt 12a im Wesentlichen einander gegenüberliegend angeordnet. Auch der Umfangsabschnitt 19b des ersten Käfigseitenrings 15b und der Umfangsabschnitt 20b des zweiten Käfigseitenrings 16b des zweiten Käfigs 14b sind vorzugsweise, in der vorbeschriebenen Ebene betrachtet, welche durch den Mittelpunkt 12b der Kugel 11b verläuft und die Längsachse AX beinhaltet, bezüglich des Mittelpunktes 12b im Wesentlichen einander gegenüberliegend angeordnet.

Wie bereits dargelegt, überlappen der erste Käfigseitenrings 15a des ersten Käfigs 14a und der zweite Käfigseitenring 16b des zweiten Käfigs 14b entlang der axialen Richtung AX der mehrreihigen Kugellageranordnung 1. Bei dem Ausführungsbeispiel, wie es in Fig. 1 in einer Schnittebene dargestellt, ist, überlappen im Einzelnen der Umfangsabschnitt 19a des ersten Käfigseitenrings 15a des ersten Käfigs 14a und der Umfangsabschnitt 20b des zweiten Käfigseitenrings 16b des zweiten Käfigs 14b. Der Umfangsabschnitt 19a des ersten Käfigseitenrings 15a des ersten Käfigs 14a und der Umfangsabschnitt 20b des zweiten Käfigseitenrings 16b des zweiten Käfigs 14b sind in dieser Schnittebene betrachtet bevorzugt beide vollständig radial außerhalb der Teilkreisfläche 22a der ersten Kugelreihe 10a und zugleich bevorzugt auch beide vollständig radial innerhalb der Teilkreisfläche 22b der zweiten Kugelreihe 10b angeordnet. Damit sind bei diesem Ausführungsbeispiel gemäß Fig. 1 der Umfangsabschnitt 19a des ersten Käfigseitenrings 15a des ersten Käfigs 14a und der Umfangsabschnitt 20b des zweiten Käfigseitenrings 16b des zweiten Käfigs 14b zwischen den Teilkreisflächen 22a und 22b der ersten und der zweiten Kugelreihen 10a, 10b angeordnet. Diese platzsparende Bauweise kann durch eine Anordnung der Umfangsabschnitte 19a und 20b mit einem ausreichend groß gewählten Abstand zu den Teilkreisflächen 22a bzw. 22b ermöglicht werden. Wie aus Fig. 1 ersichtlich ist, kann der Abstand des Umfangsabschnitts 19a des ersten Käfigseitenrings 15a des ersten Käfigs 14a von der Teilkreisfläche 22a der ersten Kugelreihe 10a derart gewählt werden, dass zwischen dem Umfangsabschnitt 19a und der Teilkreisfläche 22a noch der Umfangsabschnitt 20b des zweiten Käfigseitenrings 16b des zweiten Käfigs 14b mit ausreichend Luft zu den benachbarten Kugeln und Lagerringen untergebracht werden kann. Gleichermaßen kann der Abstand des Umfangsabschnitts 20b des zweiten Käfigseitenrings 16b des zweiten Käfigs 14b von der Teilkreisfläche 22b der zweiten Kugelreihe 10b ausreichend groß gewählt werden, um in radialer Richtung der mehrreihigen Kugellageranordnung 1 zwischen der Teilkreisfläche 22b und dem Umfangsabschnitt 20b noch den Umfangsabschnitt 19a des ersten Käfigseitenrings 15a des ersten Käfigs 14a mit Spiel gegenüber den angrenzenden Bauteilen anordnen zu können.

Der erste Käfig 14a und der zweite Käfig 14b sind darüber hinaus vorzugsweise derart ausgebildet, dass der erste Käfigseitenring 15b des zweiten Käfigs 14b und der zweite Käfigseitenring 16a des ersten Käfigs 14a nicht über die axialen Stirnseiten 8, 9, welche die mehrreihige Kugellageranordnung 1 gemäß dem in Fig. 1 gezeigten Ausführungsbeispiel entlang der Längsachse AX begrenzen, hervorstehen.

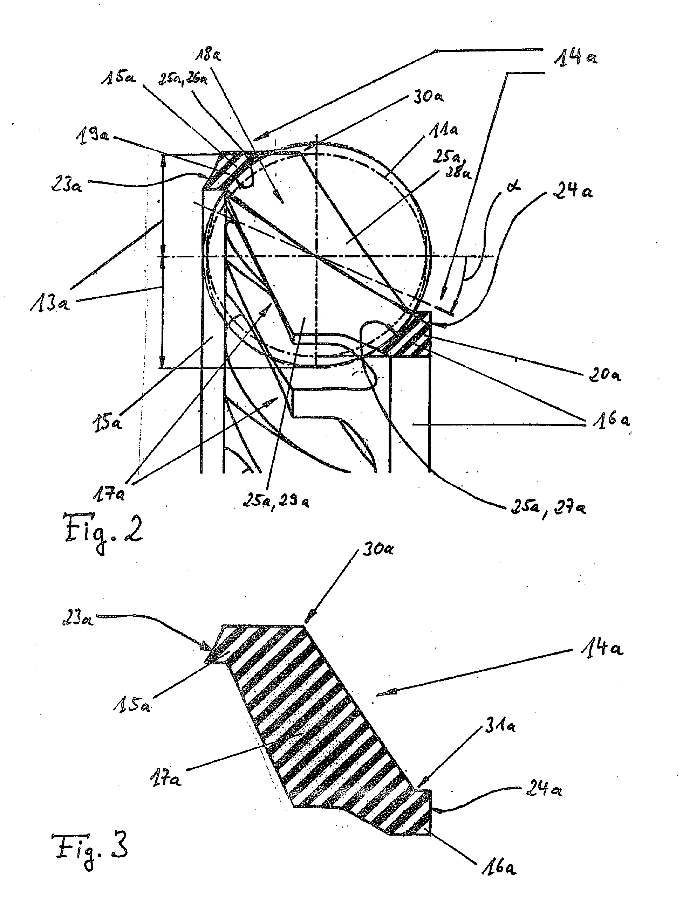

Die Gestaltung der Lagerringe 2, 3 kann in der Weise erfolgen, wie sie in Fig. 1 schematisch dargestellt ist. Jedoch können die Lagerringe 2, 3, insbesondere die Kontur der Laufbahnen 4, 5, 6, 7, sowie die Übergänge zwischen den Laufbahnen 4 und 6 des äußeren Lagerrings 3 und die Übergänge zwischen den Laufbahnen 5 und 7 des inneren Lagerrings 2 auch anders als in Fig. 1 dargestellt geformt und die mehrreihige Kugellageranordnung 1 zugleich mit Käfigen 14a und 14b ausgestattet werden, die wie vorstehend unter Bezugnahme auf Fig. 1 sowie nachstehend unter Bezugnahme auf die Figuren 2 bis 9 beschrieben ausgebildet und angeordnet sind.

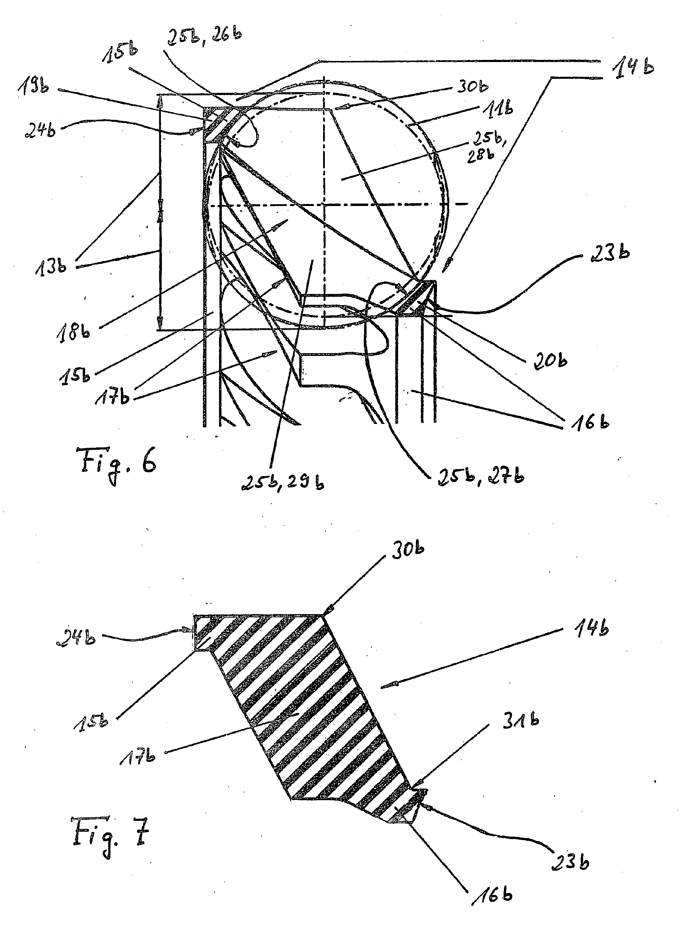

Die Gestaltung der beiden Käfige 14a, 14b der mehrreihigen Kugellageranordnung 1 wird im Folgenden noch näher beschrieben. Nachfolgend wird die Ausgestaltung des ersten Käfigs 14a der mehrreihigen Kugellageranordnung 1 gemäß dem in der vorstehend besprochenen Fig. 1 dargestellten Ausführungsbeispiel unter Bezugnahme auf die Figuren 2, 3, 4 und 5 der Zeichnung weiter erläutert. Anschließend wird die Ausgestaltung des zweiten Käfigs 14b der mehrreihigen Kugellageranordnung 1 gemäß dem Ausführungsbeispiel der Fig. 1 unter Bezugnahme auf die Figuren 6, 7, 8 und 9 beschrieben. Bei der Betrachtung der Figuren 2 bis 9 ist zu beachten, dass dort die ersten und zweiten Käfige 14a, 14b der mehrreihigen Kugellageranordnung 1 in einer zu der Darstellung der Fig. 1 spiegelbildlichen Ansicht gezeigt sind. Die Ansichten der Käfige 14a, 14b in den Fig. 2 bis 9 entsprechen also einer Betrachtung dieser Käfige 14a, 14b in Fig. 1 von hinten, mit anderen Worten, die Ansichten sind an einer längs der radialen Richtung der Kugellageranordnung 1 verlaufenden, in Fig. 1 vertikalen Achse gespiegelt.

Figur 2 zeigt eine Darstellung eines ersten Käfigs 14a der mehrreihigen Kugellageranordnung 1 gemäß Fig. 1 in einem radial geführten Längsschnitt durch den Mittelpunkt einer in einer Tasche des Käfigs 14a aufgenommenen Kugel. Der erste Käfigseitenring 15a des ersten Käfigs 14a weist bei diesem Ausführungsbeispiel einen größeren inneren und äußeren Durchmesser als der zweite Käfigseitenring 16a des ersten Käfigs 14a auf.

Der Umfangsabschnitt 19a des ersten Käfigseitenrings 15a und der Umfangsabschnitt 20a des zweiten Käfigseitenrings 16a des ersten Käfigs 14a sind in der in Fig. 2 gezeigten Schnittebene außerhalb eines zur Spur der Teilkreisfläche in dieser Ebene symmetrischen Winkelbereichs angeordnet, welcher vom Mittelpunkt der Kugel 11a gemessen ist. Ein halber Öffnungswinkel a dieses Winkelbereichs nach unten in Bezug auf die Spur der Teilkreisfläche ist in Fig. 2 mittels einer gestrichelten Linie angedeutet und beträgt bei dem gezeigten Ausführungsbeispiel bevorzugt zumindest etwa 15 bis 25 Grad.

Der zweite Käfigseitenring 16a des ersten Käfigs 14a weist eine in der axialen Richtung AX von der Mitte der Kugellageranordnung weg weisende axiale Begrenzungsfläche 24a auf, welche im Wesentlichen eben und zur Längsachse AX im Wesentlichen senkrecht ausgebildet sein kann. Auf diese Weise kann der für den ersten Käfig 14a zur Verfügung stehende Bauraum zwischen den Lagerringen 2, 3 in günstiger Weise zur Unterbringung eines hinreichend stabilen ersten Käfigseitenrings 16a genutzt und zugleich bei geringem Platzbedarf ein Vorstehen des Käfigs über die Stirnseite 8 der mehrreihigen Kugellageranordnung 1 vermieden werden.

An dem ersten Käfigseitenring 15a des ersten Käfigs 14a ist eine in Richtung der der ersten Kugelreihe 10a benachbarten zweiten Kugelreihe 10b weisende axiale Begrenzungsfläche 23a vorgesehen. Wie Fig. 2 zeigt, weist die axiale Begrenzungsfläche 23a vorzugsweise, in einem Schnitt entlang einer radialen Richtung der Kugellageranordnung betrachtet, ein Kreisbogenprofit auf. Die gesamte axiale Begrenzungsfläche 23a entsteht in diesem Fall jedoch durch eine Rotation dieses Kreisbogenprofils um die Längsachse AX. Somit stellt die axiale Begrenzungsfläche 23a des als dreidimensionaler Körper ausgebildeten Käfigs 14a einen Teil einer Torusfläche dar.

Bei dem in Fig. 2 dargestellten ersten Käfig 14a der mehrreihigen Kugellageranordnung 1 der Fig. 1 entspricht die axiale Begrenzungsfläche 23a des ersten Käfigseitenrings 15a des ersten Käfigs 14a vorzugsweise im Wesentlichen einer zu dem Käfigseitenring 15a koaxial angeordneten Torusfläche, welche von einer Kugel 11 b der zweiten Kugelreihe 10b während der Abrollbewegung der Kugel 11b zwischen den Laufbahnen 6 und 7 als Hüllfläche ihrer um ein Spiel vergrößerten Kugeloberflächen in sämtlichen ihrer möglichen Positionen entlang der zugeordneten Laufbahnen 6, 7 erzeugt wird. Mit anderen Worten, diese Torusfläche kann als Hüllfläche einer um die Längsachse AX auf einer Kreisbahn mit dem Durchmesser des Teilkreises 22b der zweiten Kugelreihe 10b bewegten Kugel mit einem Radius, welcher um ein vorzugsweise geringfügiges Spiel größer ist als der Radius 13b der Kugel 11 b, erzeugt werden.

Zu der Längsachse AX koaxiale Zylinderflächen können radiale Begrenzungsflächen des ersten Käfigseitenrings 15a und des zweiten Käfigseitenrings 16a des ersten Käfigs 14a bilden.

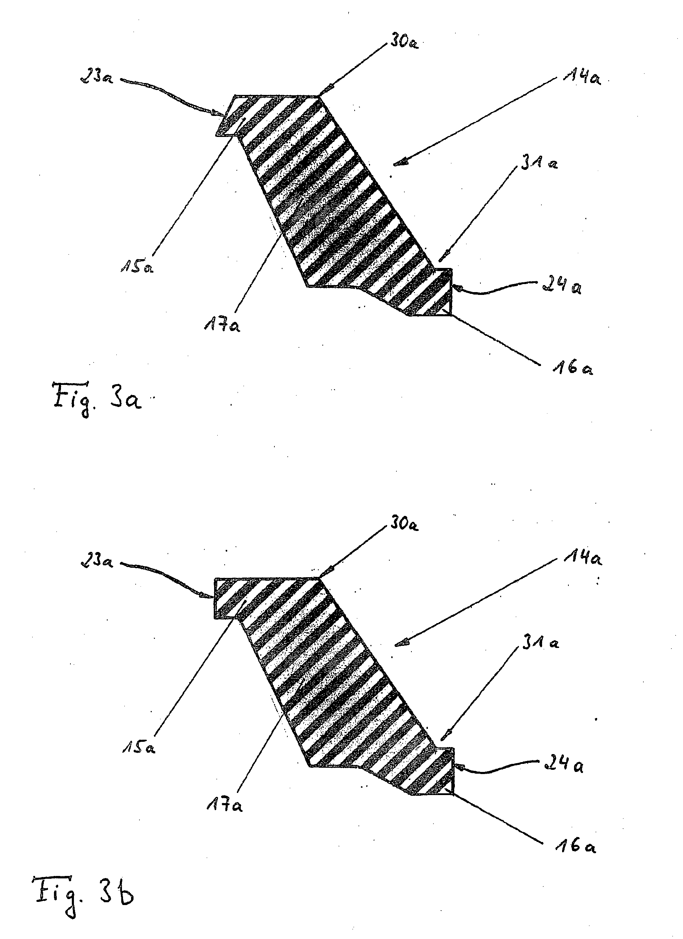

In Figur 3 ist eine Darstellung des ersten Käfigs 14a gemäß Fig. 2 in einem radial geführten Längsschnitt durch die Mitte eines Steges 17a zwischen zwei Taschen 18a des ersten Käfigs 14a gezeigt

Figur 3a zeigt eine Schnittdarstellung eines ersten Käfigs 14a durch die Mitte eines Steges 17a zwischen zwei Taschen 18a gemäß einem Ausführungsbeispiel, bei dem eine axiale Begrenzungsfläche 23a eines ersten Käfigseitenrings 15a eine alternative Ausge-staltung aufweist und als bevorzugt zu der Längsachse AX koaxiale Kegelfläche ausgebildet ist.

Figur 3b zeigt eine Schnittdarstellung eines ersten Käfigs 14a durch die Mitte eines Steges 17a zwischen zwei Taschen 18a gemäß einem weiteren Ausführungsbeispiel, bei dem eine axiale Begrenzungsfläche 23a eines ersten Käfigseitenrings 15a eine andere alternative Ausgestaltung aufweist. In dieser Ausgestaltung ist die axiale Begrenzungsfläche 23a als bevorzugt zu der Längsachse AX senkrechte, ebene Fläche ausgebildet.

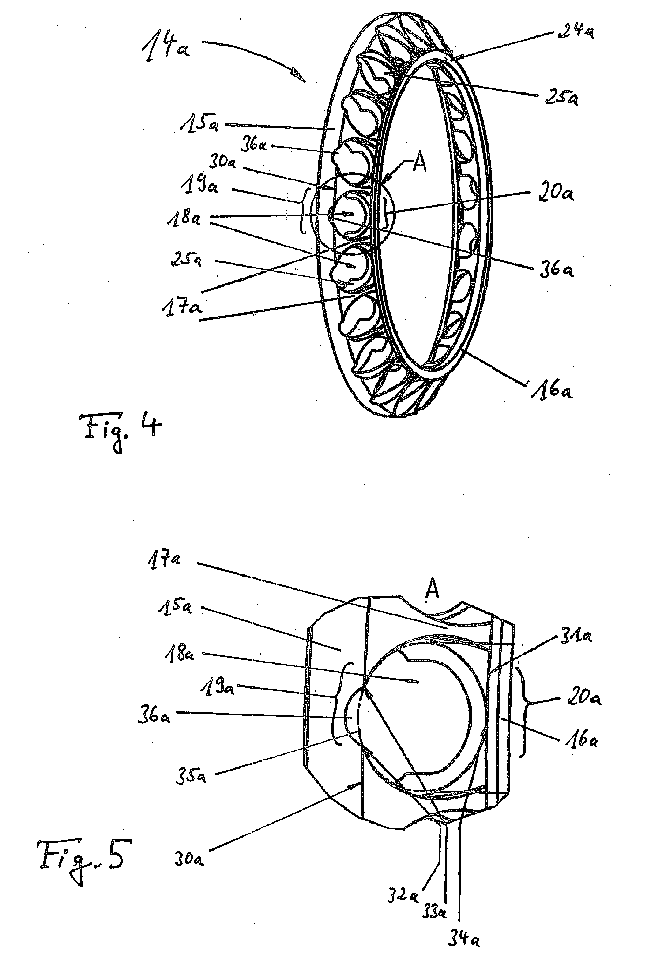

Figur 4 zeigt eine perspektivische Ansicht des ersten Käfigs 14a gemäß Fig. 2, wobei der erste Käfig 14a aus Richtung der äußeren Mantelfläche des ersten Käfigs 14a betrachtet ist. Der erste Käfigseitenring 15a des ersten Käfigs 14a und der zweite Käfigseitenring 16a des ersten Käfigs 14a sind durch längs des Umfangs des Käfigs vorzugsweise gleichmäßig beabstandete Stege 17a miteinander verbunden.

Die in Figur 5 dargestellte Detailansicht A der perspektivischen Ansicht der Fig. 4 zeigt eine Tasche 18a, welche durch zwei benachbarte Stege 17a, einen Umfangsabschnitt 19a des ersten Käfigseitenrings 15a sowie einen Umfangsabschnitt 20a des zweiten Käfigseitenrings 16a des ersten Käfigs 14a gebildet ist. Die Tasche 18a ist bevorzugt in der Weise geschlossen, dass sie eine Kugel 11a in deren Umfangsrichtung in einer durch den Mittelpunkt 12a der Kugel 11a verlaufenden Ebene vollständig umfassen kann. Dies ist auch aus den Schnittdarstellungen in den Fig. 2 und 3 ersichtlich.

Weiterhin weist eine zur Aufnahme einer Kugel 11a vorgesehene Tasche 18a eine der Kugel 11a zugewandte Begrenzungsfläche 25a auf, welche vorzugsweise aus Abschnitten 26a, 27a einer Kugelfläche und an diese anschließenden Abschnitten 28a, 29a einer Zylinderfläche gebildet ist, wie Fig. 2 zeigt. Im Einzelnen kann hierbei ein radial aussenliegender Teil der Begrenzungsfläche 25a der Tasche 18a aus einem in Fig. 2 links liegenden, dem ersten Käfigseitenring 15a des ersten Käfigs 14a benachbarten Abschnitt einer Kugelfläche 26a und einem an diesen Abschnitt einer Kugelfläche 26a in axialer Richtung anschließenden, in Fig. 2 weiter rechts liegenden Abschnitt einer Zylinderfläche 28a gebildet sein. Bei dem ersten Käfig 14a der mehrreihigen Kugellageranordnung 1 gemäß Fig. 2 entspricht der Durchmesser der Kugelfläche, welche den Abschnitt 26a erzeugt, vorzugsweise dem Durchmesser der Zylinderfläche, welche den Abschnitt 28a erzeugt. Gleichermaßen kann ein radial innenliegender Teil der Begrenzungsfläche 25a der Tasche 18a aus einem in Fig. 2 rechts liegenden, dem zweiten Käfigseitenring 16a des ersten Käfigs 14a benachbarten Abschnitt einer Kugelfläche 27a und einem an diesen Abschnitt einer Kugelfläche 27a in axialer Richtung anschließenden, in Fig. 2 weiter links liegenden Abschnitt einer Zylinderfläche 29a gebildet sein. Bei dem ersten Käfig 14a des in Fig. 1 dargestellten Ausführungsbeispiels der mehrreihigen Kugellageranordnung entspricht wiederum der Durchmesser der Kugelfläche, welche den Abschnitt 27a erzeugt, dem Durchmesser der Zylinderfläche, welche den Abschnitt 29a erzeugt. Durch diese Konstruktion kann die Tasche 18a mittels eines Spritzgießwerkzeuges hergestellt werden, das ausschließlich in der axialen Richtung AX bewegliche Formkerne in Gestalt von einen Innenbereich der Tasche 18a ausfüllenden Stiften aufweist. Auf radial bewegliche Kerne kann damit verzichtet werden, was die Herstellung des ersten Käfigs 14a vereinfacht und verbilligt.

Wie nun wieder in Fig. 5 dargestellt, ist im Bereich der Tasche 18a vorzugsweise eine Dreipunkt-Schnappeinrichtung zum Halten der Kugel 11a in der Tasche 18a vorgesehen, welche mit zwei Punkten 32a, 33a des ersten Käfigseitenrings 15a und mit einem Punkt 34a des zweiten Käfigseitenrings 16a gebildet ist. Bei dem gezeigten Ausführungsbeispiel sind die beiden Punkte 32a und 33a des ersten Käfigseitenrings 15a voneinander verschieden und liegen auf einer an die Tasche 18a angrenzenden Kante 30a einer äußeren Umfangsfläche des ersten Käfigseitenrings 15a, während der eine Punkt 34a des zweiten Käfigseitenrings 16a auf einer an die Tasche 18a angrenzenden Kante 31a einer äußeren Umfangsfläche des zweiten Käfigseitenrings 16a des ersten Käfigs 14a liegt. Die Punkte 32a, 33a und 34a sind vorzugsweise auf einem in Fig. 5 durch eine strichpunktierte Linie angedeuteten Kreis 35a angeordnet. Der Kreis 35a weist bevorzugt einen Durchmesser auf, der kleiner als der Durchmesser der in der Tasche 18a aufgenommenen Kugel 11a ist.

Die beiden Punkte 32a und 33a auf der an die Tasche angrenzenden Kante 30a der äußeren Umfangsfläche des ersten Käfigseitenrings 15a können zwei Ecken einer Ausnehmung 36a in dem ersten Käfigseitenring 15a des ersten Käfigs 14a bilden, wie in Fig. 5 dargestellt. Die Ausnehmung 36a in der äußeren Umfangsfläche des ersten Käfigseitenrings 15a kann eine kreissegmentartige Form aufweisen. Durch den wie vorstehend beschrieben gewählten Durchmesser des Kreises 35a kann die Kugel 11a durch ein elastisches Zurückweichen der Ecken der Ausnehmung 36a in den Innenbereich der Tasche 18a eingesetzt oder eingeschnappt werden.

Fig. 6 zeigt eine Darstellung eines zweiten Käfigs 14b der mehrreihigen Kugellageranordnung 1 gemäß dem Ausführungsbeispiel der Fig. 1 in einem radial geführten Längsschnitt durch den Mittelpunkt einer in einer Tasche des Käfigs 14b aufgenommenen Kugel. Der erste Käfigseitenrings 15b des zweiten Käfigs 14b weist einen größeren inneren und äußeren Durchmesser als der zweite Käfigseitenring 16b des zweiten Käfigs 14b auf.

Der erste Käfigseitenring 15b des zweiten Käfigs 14b weist vorzugsweise eine in der axialen Richtung AX von der Mitte der Kugellageranordnung weg weisende axiale Begrenzungsfläche 24b auf, welche im Wesentlichen eben und zur Längsachse AX im Wesentlichen senkrecht ausgebildet ist. Wie bereits in Bezug auf den ersten Käfig 14a erläutert, kann der zur Verfügung stehende Platz durch eine derartige Konstruktion besonders gut ausgenutzt werden.

Auch an dem zweiten Käfigseitenring 16b des zweiten Käfigs 14b ist bevorzugt eine axiale Begrenzungsfläche 23b vorgesehen, welche in einem radialen Schnitt durch die mehrreihige Kugellageranordnung 1 betrachtet ebenfalls mit einem Kreisbogenprofil versehen ist. Die axiale Begrenzungsfläche 23b des zweiten Käfigseitenrings 16b des zweiten Käfigs 14b weist hierbei in Richtung der der zweiten Kugelreihe 10b benachbarten ersten Kugelreihe 10a. Wiederum kann die gesamte axiale Begrenzungsfläche 23b durch eine Rotation dieses Kreisbogenprofils um die Längsachse AX erzeugt werden. Somit stellt bei diesem Ausführungsbeispiel auch die axiale Begrenzungsfläche 23b des als dreidimensionaler Körper ausgebildeten Käfigs 14b einen Teil einer Torusfläche dar, wobei diese Torusfläche von der unter Bezugnahme auf die axiale Begrenzungsfläche 23a des ersten Käfigseitenrings 15a des ersten Käfigs 14a genannten Torusfläche verschieden ist.

Bei dem nun in Fig. 6 dargestellten zweiten Käfig 14b der mehrreihigen Kugellageranordnung 1 gemäß Fig. 1 entspricht die axiale Begrenzungsfläche 23b des zweiten Käfigseitenrings 16b vorzugsweise im Wesentlichen einer zu dem Käfigseitenring 16b koaxial angeordneten Torusfläche, welche von einer Kugel 11a der ersten Kugelreihe 10a während der Abrollbewegung der Kugel 11a zwischen den Laufbahnen 4 und 5 als Hüllfläche ihrer um ein Spiel vergrößerten Kugeloberflächen in sämtlichen ihrer möglichen Positionen entlang der zugeordneten Laufbahnen 4, 5 erzeugt wird. Mit anderen Worten kann diese Torusfläche als Hüllfläche einer um die Längsachse AX auf einer Kreisbahn mit dem Durchmesser des Teilkreises 22a der ersten Kugelreihe 10a bewegten Kugel mit einem Radius, welcher um ein vorzugsweises geringfügiges Spiel größer ist als der Radius 13a der Kugel 11a, erzeugt werden.

Bei einem anderen Ausführungsbeispiel kann die axiale Begrenzungsfläche 23b des zweiten Käfigseitenrings 16b des zweiten Käfigs 14b wie unter Bezugnahme auf die Fig. 3a und 3b weiter oben beschrieben auch als Kegelfläche oder als zur Längsachse AX senkrechte ebene Fläche ausgebildet sein. Zur Längsachse AX koaxiale Zylinderflächen können radiale Begrenzungsflächen des ersten Käfigseitenrings 15b und des zweiten Käfigseitenrings 16b des zweiten Käfigs 14b bilden.

Fig. 7 zeigt eine Darstellung des zweiten Käfigs gemäß Fig. 6 in einem radial geführten Längsschnitt durch die Mitte eines Steges 17b zwischen zwei Taschen 18b des zweiten Käfigs 14b. Durch die unter Bezugnahme auf Fig. 2 erläuterte Formgebung der axialen Begrenzungsfläche 23a des ersten Käfigseitenrings 15a des ersten Käfigs 14a und durch die zusätzliche, unter Bezugnahme auf Fig. 6 vorstehend beschriebene Formgebung der axialen Begrenzungsfläche 23b des zweiten Käfigseitenrings 16b des zweiten Käfigs 14b kann eine große Überlappung des ersten Käfigseitenrings 15a des ersten Käfigs 14a und des zweiten Käfigseitenrings 16b des zweiten Käfigs 14b erzielt werden, weil im Bereich der Käfigseitenringe 15a und 16b durch geeignete gewählte Querschnitte dieser Käfigseitenringe 15a, 16b Platz für die jeweils angrenzende Kugelreihe 10b bzw. 10a geschaffen werden kann, wie wiederum die Schnittansicht des Ausführungsbeispiels der zusammengebauten mehrreihigen Kugellageranordnung 1 in Fig. 1 verdeutlicht. Eine reibende Berührung des ersten Käfigseitenrings 15a des ersten Käfigs 14a mit den Kugeln 11 b der zweiten Kugelreihe 10b und eine reibende Berührung des zweiten Käfigseitenrings 16b des zweiten Käfigs 14b mit den Kugeln 11a der ersten Kugelreihe 10a kann so vermieden werden, was sich günstig auf die Lebensdauer der Käfige 14a, 14b und auch günstig im Hinblick auf eine gewichtsparende Gestaltung der Käfige 14a, 14b auswirkt. Fig. 1 zeigt auch, dass der Reihenabstand 37 der ersten Kugelreihe 10a und der zweiten Kugelreihe 10b, welcher in der Richtung der Längsachse AX zwischen dem Mittelpunkt 12a einer Kugel 11a der ersten Kugelreihe 10a und dem Mittelpunkt 12b einer Kugel 11b der zweiten Kugelreihe 10b gemessen wird, geringer sein kann als die Summe der Radien 13a, 13b dieser beiden Kugeln 11a, 11b.

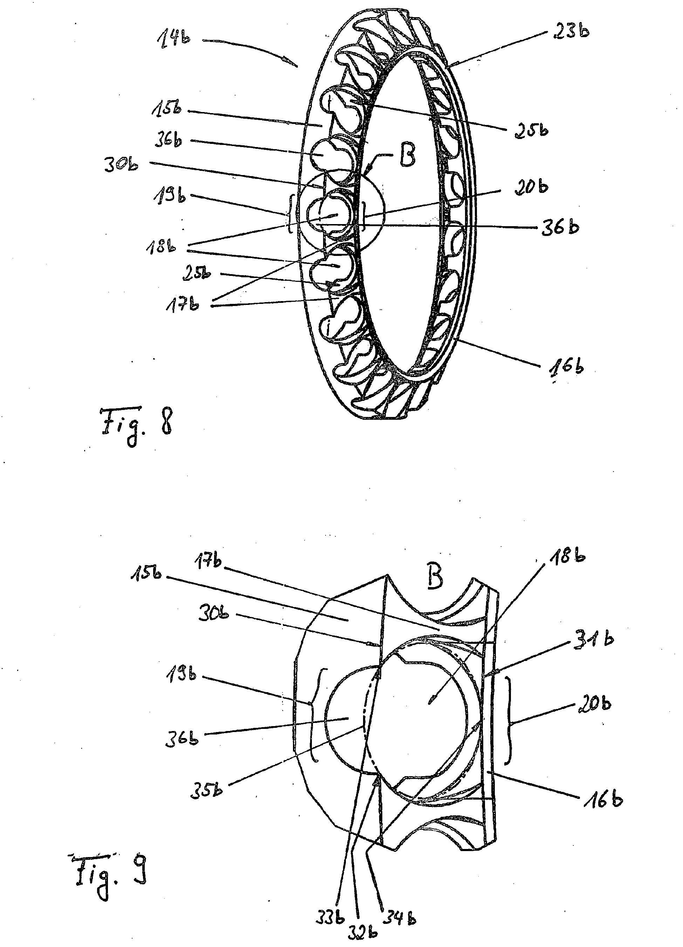

In Figur 8 ist eine perspektivische Ansicht des zweiten Käfigs 14b gemäß Fig. 6 gezeigt, wobei der zweite Käfig 14b aus Richtung der äußeren Mantelfläche des zweiten Käfigs 14b betrachtet ist. Der erste Käfigseitenring 15b des zweiten Käfigs 14b und der zweite Käfigseitenring 16b des zweiten Käfigs 14b sind durch längs des Umfangs des Käfigs 14b vorzugsweise gleichmäßig beabstandete Stege 17b miteinander verbunden.

Die in Figur 9 dargestellte Detailansicht B der perspektivischen Ansicht der Fig. 8 zeigt eine Tasche 18b, welche durch zwei benachbarte Stege 17b, einen Umfangsabschnitt 19b des ersten Käfigseitenrings 15b sowie einen Umfangsabschnitt 20b des zweiten Käfigseitenrings 16b des zweiten Käfigs 14b gebildet ist. Die Tasche 18b ist bevorzugt in der Weise geschlossen, dass sie eine Kugel 11b in deren Umfangsrichtung in einer durch den Mittelpunkt 12b der Kugel 11b verlaufenden Ebene vollständig umfassen kann. Dies ist aus den Schnittdarstellungen in den Fig. 6 und 7 ebenfalls ersichtlich.

Weiterhin weist eine zur Aufnahme einer Kugel 11b vorgesehene Tasche 18b eine der Kugel 11b zugewandte Begrenzungsfläche 25b auf, welche vorzugsweise aus Abschnitten 26b, 27b einer Kugelfläche und an diese anschließenden Abschnitten 28b, 29b einer Zylinderfläche gebildet ist, wie Fig. 6 zeigt. Im Einzelnen kann ein radial außenliegender Teil der Begrenzungsfläche 25b der Tasche 18b aus einem in Fig. 6 links liegenden, dem ersten Käfigseitenring 15b des zweiten Käfigs 14b benachbarten Abschnitt einer Kugelfläche 26b und einem an diesen Abschnitt einer Kugelfläche 26b in axialer Richtung anschließenden, in Fig. 6 weiter rechts liegenden Abschnitt einer Zylinderfläche 28b gebildet sein. Bei dem zweiten Käfig 14b der mehrreihigen Kugellageranordnung 1 gemäß Fig. 6 entspricht der Durchmesser der Kugelfläche, welche den Abschnitt 26b erzeugt, vorzugsweise dem Durchmesser der Zylinderfläche, welche den Abschnitt 28b erzeugt. Gleichermaßen kann ein radial innenliegender Teil der Begrenzungsfläche 25b der Tasche 18b aus einem in Fig. 6 rechts liegenden, dem zweiten Käfigseitenring 16b des zweiten Käfigs 14b benachbarten Abschnitt einer Kugelfläche 27b und einem an diesen Abschnitt einer Kugelfläche 27b in axialer Richtung anschließenden, in Fig. 6 weiter links liegenden Abschnitt einer Zylinderfläche 29b gebildet sein. Bei dem zweiten Käfig 14b der mehrreihigen Kugellageranordnung 1 der Fig. 6 entspricht wiederum der Durchmesser der Kugelfläche, welche den Abschnitt 27b erzeugt, dem Durchmesser der Zylinderfläche, welche den Abschnitt 29b erzeugt. Durch diese Konstruktion kann die Tasche 18b mittels eines Spritzgießwerkzeuges hergestellt werden, das ausschließlich in axialer Richtung AX bewegliche Formkerne in Gestalt von den Innenbereich der Tasche 18b ausfüllenden Stiften aufweist. Auf radial bewegliche Kerne kann damit verzichtet werden, was die Herstellung des zweiten Käfigs 14b vereinfacht und verbilligt.

Wie nun wieder in Fig. 9 dargestellt, ist auch im Bereich der Tasche 18b des zweiten Käfigs 14b vorzugsweise eine Dreipunkt-Schnappeinrichtung zum Halten der Kugel 11 b in der Tasche 18b vorgesehen, welche mit zwei Punkten 32b, 33b des ersten Käfigseitenrings 15b und mit einem Punkt 34b des zweiten Käfigseitenrings 16b gebildet ist. Bei dem gezeigten Ausführungsbeispiel sind die beiden Punkte 32b und 33b des ersten Käfigseitenrings 15b voneinander verschieden und liegen auf einer an die Tasche 18b angrenzenden Kante 30b einer äußeren Umfangsfläche des ersten Käfigseitenrings 15b, während der eine Punkt 34b des zweiten Käfigseitenrings 16b auf einer an die Tasche 18b angrenzenden Kante 31b einer äußeren Umfangsfläche des zweiten Käfigseitenrings 16b des zweiten Käfigs 14b liegt. Die Punkte 32b, 33b und 34b sind vorzugsweise auf einem in Fig. 9 durch eine strichpunktierte Linie angedeuteten Kreis 35b angeordnet. Der Kreis 35b weist bevorzugt einen Durchmesser auf, der kleiner als der Durchmesser der in der Tasche 18b aufgenommenen Kugel 11 b ist.

Die beiden Punkte 32b und 33b der an die Tasche angrenzenden Kante 30b der äußeren Umfangsfläche des ersten Käfigseitenrings 15b können zwei Ecken einer Ausnehmung 36b in dem ersten Käfigseitenring 15b des zweiten Käfigs 14b bilden, wie Fig. 9 zeigt. Die Ausnehmung 36b in der äußeren Umfangsfläche des ersten Käfigseitenrings 15b kann eine kreissegmentartige Form aufweisen. Durch den wie vorstehend beschrieben gewählten Durchmesser des Kreises 35b kann die Kugel 11b durch ein geringes elastisches Zurückweichen der Ecken der Ausnehmung 36b in den Innenbereich der Tasche 18b eingesetzt werden.

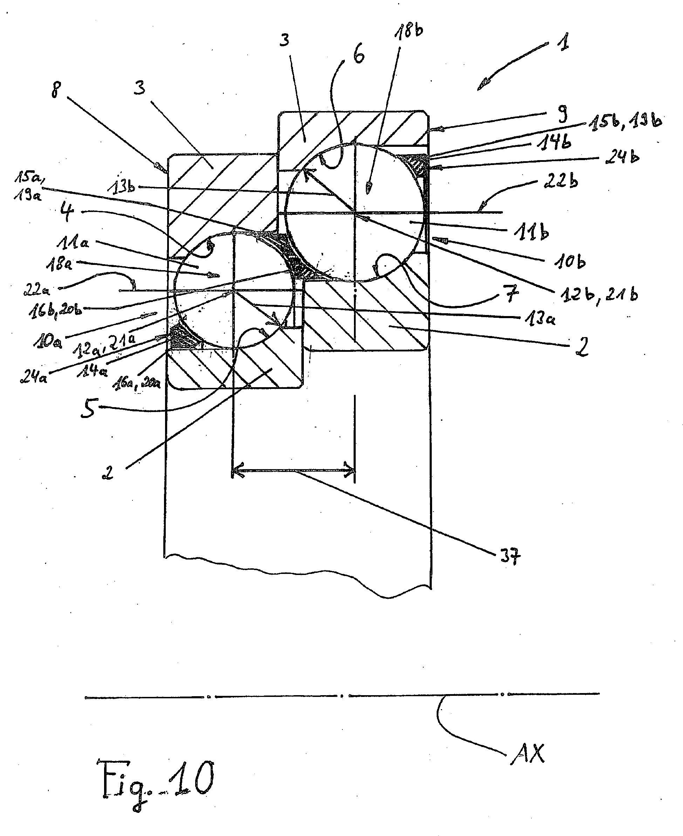

Fig. 10 zeigt ein weiteres Ausführungsbeispiel der mehrreihigen Kugellageranordnung, welches sich von dem unter Bezugnahme auf die Figuren 1 bis 9 beschriebenen Ausführungsbeispiel dadurch unterscheidet, dass der innere Lagerring 2 und der äußere Lagerring 3 nicht jeweils als ein einziges Bauteil ausgebildet sind, sondern jeweils geteilt sind und somit aus zwei in Längsrichtung des Lagers hintereinander angeordneten Ringen bestehen, welche ihrerseits mit Laufbahnen für Kugeln ausgestattet sind. In Fig. 10 sind die beiden Teile des inneren Lagerrings jeweils mit dem Bezugszeichen 2, die beiden Teile des äußeren Lagerrings jeweils mit dem Bezugszeichen 3 versehen.

Obwohl die Erfindung vorstehend anhand bevorzugter Ausführungsbeispiele beschrieben wurde, sei sie nicht darauf beschränkt, sondern kann auf vielfältige Art und Weise modifiziert werden, ohne vom Gegenstand der vorliegenden Erfindung abzuweichen. Insbesondere ist die Erfindung nicht auf zweireihige Schrägkugellager beschränkt. Vielmehr ist es denkbar, beispielsweise Schrägkugellager mit beliebig vielen Kugelreihen, welche sowohl gleiche als auch unterschiedliche Teilkreisdurchmesser sowie gleiche oder unterschiedliche Kugeldurchmesser aufweisen können, in der vorstehenden beschriebenen Weise mit Käfigen zur Führung der Kugeln auszustatten.

Darüber hinaus ist es natürlich auch denkbar, dass die einzelnen Kugelreihen mit ihren zugehörigen Laufbahnen in den Lagerringen nicht einseitig wirkend in Tandem-Anordnung, sondern zweiseitig wirkend in X- oder O-Anordnung vorgesehen sind.

Außerdem ist es natürlich möglich, nicht nur Schrägkugellager und Anordnungen dieser, sondern auch andere Formen mehrreihiger Kugellager und Kugellageranordnungen in der vorstehend beschriebenen Weise mit Käfigen zu versehen. Insbesondere ist eine Anwendung auf mehrreihige Anordnungen von Rillenkugellagern und Spindellagern denkbar.

Auch mehrere, für sich getrennt hergestellte Kugel- oder Schrägkugellager, welche hintereinander direkt angrenzend beispielsweise auf einer Welle angeordnet sind, können in der hier beschriebenen Weise mit Käfigen versehen werden, wobei die Gestaltung der Lagerringe der aneinandergrenzenden Kugel- oder Schrägkugellager je nach dem Einsatzbereich der Kugellageranordnung gewählt werden kann und nicht auf die in den Ausführungsbeispielen gezeigte Formgebung der Lagerringe beschränkt ist.

### Bezugszeichenliste

- 1: mehrreihige Kugellageranordnung
- 2: innerer Lagerring
- 3: äußerer Lagerring
- 4: Laufbahn (äußerer Lagerring)
- 5: Laufbahn (innerer Lagerring)
- 6: Laufbahn (äußerer Lagerring)
- 7: Laufbahn (innerer Lagerring)
- 8: Stirnseite
- 9: Stirnseite
- 10a: erste Kugelreihe
- 10b: zweite Kugelreihe
- 11a: Kugel (erste Kugelreihe)
- 11b: Kugel (zweite Kugelreihe)
- 12a: Mittelpunkt (Kugel)
- 12b: Mittelpunkt (Kugel)
- 13a: Radius (Kugel, erste Kugelreihe)
- 13b: Radius (Kugel, zweite Kugelreihe)
- 14a: erster Käfig
- 14b: zweiter Käfig
- 15a: erster Käfigseitenrings (erster Käfig)
- 15b: erster Käfigseitenring (zweiter Käfig)
- 16a: zweiter Käfigseitenring (erster Käfig)
- 16b: zweiter Käfigseitenring (zweiter Käfig)
- 17a: Steg (erster Käfig)
- 17b: Steg (zweiter Käfig)
- 18a: Tasche (erster Käfig)
- 18b: Tasche (zweiter Käfig)
- 19a: Umfangsabschnitt (erster Käfigseitenring, erster Käfig)
- 19b: Umfangsabschnitt (erster Käfigseitenring, zweiter Käfig)
- 20a: Umfangsabschnitt (zweiter Käfigseitenring, erster Käfig)
- 20b: Umfangsabschnitt (zweiter Käfigseitenring, zweiter Käfig)
- 21a: Teilkreis (erste Kugelreihe)
- 21b: Teilkreis (zweite Kugelreihe)
- 22a: Teilkreisfläche (erste Kugelreihe)
- 22b: Teilkreisfläche (zweite Kugelreihe)
- 23a: axiale Begrenzungsfläche (erster Käfig)
- 23b: axiale Begrenzungsfläche (zweiter Käfig)
- 24a: axiale Begrenzungsfläche (erster Käfig)
- 24b: axiale Begrenzungsfläche (zweiter Käfig)
- 25a: Begrenzungsfläche (Tasche, erster Käfig)
- 25b: Begrenzungsfläche (Tasche, zweiter Käfig)
- 26a: Abschnitt einer Kugelfläche
- 26b: Abschnitt einer Kugelfläche
- 27a: Abschnitt einer Kugelfläche
- 27b: Abschnitt einer Kugelfläche
- 28a: Abschnitt einer Zylinderfläche
- 28b: Abschnitt einer Zylinderfläche
- 29a: Abschnitt einer Zylinderfläche
- 29b: Abschnitt einer Zylinderfläche
- 30a: Kante
- 30b: Kante
- 31a: Kante
- 31b: Kante
- 32a: Punkt
- 32b: Punkt
- 33a: Punkt
- 33b: Punkt
- 34a: Punkt
- 34b: Punkt
- 35a: Kreis
- 35b: Kreis
- 36a: Ausnehmung
- 36b: Ausnehmung
- 37: Reihenabstand
- AX: axiale Richtung und Längsachse
- α: halber Öffnungswinkel

## Patentansprüche

1. Mehrreihige Kugellageranordnung (1),
mit zumindest einem inneren Lagerring (2) und zumindest einem äußeren Lagerring (3), welche koaxial auf einer Längsachse (AX) angeordnet sind;
mit mehreren zwischen dem zumindest einen inneren und dem zumindest einen äußeren Lagerring (2, 3) in mindestens einer ersten Kugelreihe (10a) und einer der ersten Kugelreihe (10a) benachbarten zweiten Kugelreihe (10b) angeordneten Kugeln (11a, 11b);
mit einem ersten Käfig (14a) zur Führung der Kugeln (11a) der ersten Kugelreihe (10a), und einem zweiten Käfig (14b) zur Führung der Kugeln (11b) der zweiten Kugelreihe (10b);
wobei der erste und der zweite Käfig (14a, 14b) jeweils einen ersten und einen zweiten Käfigseitenring (15a, 15b, 16a, 16b) aufweisen; wobei der erste Käfigseitenring (15a) des ersten Käfigs (14a) und der zweite Käfigseitenring (16b) des zweiten Käfigs (14b) einander benachbart und zumindest bereichsweise entlang der Längsachse (AX) überlappend angeordnet sind;
wobei der erste und/oder der zweite Käfig (14a, 14b) jeweils mehrere Stege (17a, 17b) aufweisen, welche die dem jeweiligen Käfig (14a, 14b) zugehörigen ersten und zweiten Käfigseitenringe (15a, 15b, 16a, 16b) derart verbinden, dass zur Aufnahme der Kugeln (11a, 11b) Taschen (18a, 18b) ausgebildet sind, die jeweils durch zwei benachbarte Stege (17a, 17b), einen Umfangsabschnitt (19a, 19b) des ersten Käfigseitenrings (15a, 15b) und einen Umfangsabschnitt (20a, 20b) des zweiten Käfigseitenrings (16a, 16b) begrenzt sind, und
wobei im Bereich einer Tasche (18a, 18b) des ersten und/oder zweiten Käfigs (14a, 14b) eine mit zwei Punkten (32a, 32b, 33a, 33b) des ersten Käfigseitenrings (15a, 15b) und mit einem Punkt (34a, 34b) des zweiten Käfigseitenrings (16a, 16b) gebildete Dreipunkt-Schnappeinrichtung zum Halten der Kugel (11a, 11b) in der Tasche (18a, 18b) vorgesehen ist, welche ein Einsetzen der Kugel (11a, 11b) in die Tasche (18a, 18b) durch elastische Verformung im Bereich der beiden Punkte (32a, 32b, 33a, 33b) des ersten Käfigseitenrings (15a, 15b) und des einen Punktes (34a, 34b) des zweiten Käfigseitenrings (16a, 16b) erlaubt.

2. Mehrreihige Kugellageranordnung nach Anspruch 1, **dadurch gekennzeichnet, dass** der Umfangsabschnitt (19a, 19b) des ersten Käfigseitenrings (15a, 15b) und der Umfangsabschnitt (20a, 20b) des zweiten Käfigseitenrings (16a, 16b) des ersten und/oder zweiten Käfigs (14a, 14b) vollständig auf verschiedenen Seiten einer Teilkreisfläche (22a, 22b) der dem Käfig (14a, 14b) zugeordneten Kugelreihe (10a, 10b) angeordnet sind und die Teilkreisfläche (22a, 22b) nicht berühren.

3. Mehrreihige Kugellageranordnung nach Anspruch 1 oder 2, **dadurch gekennzeichnet, dass** der Umfangsabschnitt (19a, 19b) des ersten Käfigseitenrings (15a, 15b) und der Umfangsabschnitt (20a, 20b) des zweiten Käfigseitenrings (16a, 16b) des ersten und/oder zweiten Käfigs (14a, 14b) bezüglich des Mittelpunktes (12a, 12b) einer Kugel (11a, 11 b) der dem Käfig (14a, 14b) zugeordneten Kugelreihe (10a, 10b) im Wesentlichen einander gegenüberliegend angeordnet sind.

4. Mehrreihige Kugellageranordnung nach einem der vorangehenden Ansprüche, **dadurch gekennzeichnet, dass** der Umfangsabschnitt (19a) des ersten Käfigseitenrings (15a) des ersten Käfigs (14a) und der Umfangsabschnitt (20b) des zweiten Käfigseitenrings (16b) des zweiten Käfigs (14b) beide vollständig auf derselben Seite der Teilkreisfläche (22a) der ersten Kugelreihe (10a) und beide vollständig auf derselben Seite der Teilkreisfläche (22b) der zweiten Kugelreihe (10b) angeordnet sind.

5. Mehrreihige Kugellageranordnung nach einem der vorangehenden Ansprüche, **dadurch gekennzeichnet, dass** der Teilkreis (21b) der zweiten Kugelreihe (10b) einen größeren Durchmesser als der Teilkreis (21a) der ersten Kugelreihe (10a) aufweist.

6. Mehrreihige Kugellageranordnung nach einem der vorangehenden Ansprüche, **dadurch gekennzeichnet, dass** die Käfigseitenringe (15a, 15b, 16a, 16b) des ersten und des zweiten Käfigs (14a, 14b) kreisringförmig ausgebildet sind und dass der erste Käfigseitenring (15a) des ersten Käfigs (14a) einen größeren inneren und äußeren Durchmesser als der zweite Käfigseitenring (16a) des ersten Käfigs (14a) aufweist und/oder dass der erste Käfigseitenring (15b) des zweiten Käfigs (14b) einen größeren inneren und äußeren Durchmesser als der zweite Käfigseitenring (16b) des zweiten Käfigs (14b) aufweist.

7. Mehrreihige Kugellageranordnung nach Anspruch 6, **dadurch gekennzeichnet, dass** der erste Käfigseitenring (15a) des ersten Käfigs (14a) einen inneren Durchmesser aufweist, welcher größer ist als der äußere Durchmesser des zweiten Käfigseitenrings (16b) des zweiten Käfigs (14b).

8. Mehrreihige Kugellageranordnung nach einem der vorangehenden Ansprüche, **dadurch gekennzeichnet, dass** der erste Käfigseitenring (15a) des ersten Käfigs (14a) eine in Richtung der zweiten Kugelreihe (10b) weisende axiale Begrenzungsfläche (23a) aufweist, welche einen Teil einer Torusfläche bildet und/oder dass der zweite Käfigseitenring (16b) des zweiten Käfigs (14b) eine in Richtung der ersten Kugelreihe (10a) weisende axiale Begrenzungsfläche (23b) aufweist, welche einen Teil einer anderen Torusfläche bildet.

9. Mehrreihige Kugellageranordnung nach einem der vorangehenden Ansprüche, **dadurch gekennzeichnet, dass** eine Tasche (18a, 18b) eine einer in der Tasche (18a, 18b) aufgenommenen Kugel (11a, 11b) zugewandte Begrenzungsfläche (25a, 25b) aufweist, welche aus aneinander anschließenden Abschnitten (26a, 26b, 27a, 27b) einer Kugelfläche und Abschnitten (28a, 28b, 29a, 29b) einer Zylinderfläche gebildet ist.

10. Mehrreihige Kugellageranordnung nach einem der vorangehenden Ansprüche, **dadurch gekennzeichnet, dass** die mehrreihige Kugellageranordnung (1) als mehrreihiges Schrägkugellager mit einem inneren Lagerring (2) und einem äußeren Lagerring (3), insbesondere als zweireihiges Tandem-Schrägkugellager, ausgebildet ist oder dass die mehrreihige Kugellageranordnung (1) als Tandem-Anordnung mehrerer, insbesondere zweier, einreihiger Schrägkugellager ausgebildet ist.

11. Mehrreihige Kugellageranordnung nach einem der vorangehenden Ansprüche, **dadurch gekennzeichnet, dass** eine Kugel (11a) der ersten Kugelreihe (10a) einen Durchmesser aufweist, welcher von einem Durchmesser einer Kugel (11b) der zweiten Kugelreihe (10b) verschieden ist.

12. Mehrreihige Kugellageranordnung nach einem der vorangehenden Ansprüche, **dadurch gekennzeichnet, dass** der Reihenabstand (37) der ersten und der zweiten Kugelreihe (10a, 10b), gemessen in Richtung der Längsachse (AX), zwischen den Mittelpunkten (12a, 12b) einer Kugel (11a) der ersten Kugelreihe (10a) und einer Kugel (11b) der zweiten Kugelreihe (10b), geringer ist als die Summe der Radien (13a, 13b) dieser beiden Kugeln (11 a, 11 b).

13. Ein- oder mehrreihige Kugellageranordnung,
mit zumindest einem inneren Lagerring (2) und zumindest einem äußeren Lagerring (3), welche koaxial auf einer Längsachse (AX) angeordnet sind;
mit mehreren zwischen dem zumindest einen inneren und dem zumindest einen äußeren Lagerring (2, 3) in mindestens einer Kugelreihe (10a) angeordneten Kugeln (11a);
mit zumindest einem Käfig (14a) zur Führung der Kugeln (11a);
wobei der Käfig (14a) einen ersten und einen zweiten Käfigseitenring (15a, 16a) aufweist;
wobei der Käfig (14a) mehrere Stege (17a) aufweist, welche die ersten und zweiten Käfigseitenringe (15a, 16a) derart verbinden, dass zur Aufnahme der Kugeln (11a) Taschen (18a) ausgebildet sind, die jeweils durch zwei benachbarte Stege (17a), einen Umfangsabschnitt (19a) des ersten Käfigseitenrings (15a) und einen Umfangsabschnitt (20a) des zweiten Käfigseitenrings (16a) begrenzt sind;
wobei der Umfangsabschnitt (19a) des ersten Käfigseitenrings (15a) und der Umfangsabschnitt (20a) des zweiten Käfigseitenrings (16a) des Käfigs (14a) vollständig auf verschiedenen Seiten einer Teilkreisfläche (22a) der dem Käfig (14a) zugeordneten Kugelreihe (10a) angeordnet sind und die Teilkreisfläche (22a) nicht berühren; und
wobei im Bereich einer Tasche (18a) des Käfigs (14a) eine mit zwei Punkten (32a, 33a) des ersten Käfigseitenrings (15a) und mit einem Punkt (34a) des zweiten Käfigseitenrings (16a) gebildete Dreipunkt-Schnappeinrichtung zum Halten der Kugel (11a) in der Tasche (18a) vorgesehen ist, welche ein Einsetzen der Kugel (11a) in die Tasche (18a) durch elastische Verformung im Bereich der beiden Punkte (32a, 33a) des ersten Käfigseitenrings (15a) und des einen Punktes (34a) des zweiten Käfigseitenrings (16a) erlaubt.

## Claims

1. Multiple-row ball bearing arrangement (1), having at least one inner bearing ring (2) and at least one outer bearing ring (3), which are arranged coaxially on a longitudinal axis (AX); having a plurality of balls (11a, 11b) which are arranged between the at least one inner and the at least one outer bearing ring (2, 3) in at least one first ball row (10a) and one second ball row (10b) which is adjacent the first ball row (10a); having a first cage (14a) for guiding the balls (11a) of the first ball row (10a), and a second cage (14b) for guiding the balls (11b) of the second ball row (10b); wherein the first and the second cage (14a, 14b) have, in each case, a first and a second cage side ring (15a, 15b, 16a, 16b); wherein the first cage side ring (15a) of the first cage (14a) and the second cage side ring (16b) of the second cage (14b) are adjacent each other and are arranged so as to overlap at least in sections along the longitudinal axis (AX);
wherein, in each case, the first and/or the second cage (14a, 14b) have a plurality of webs (17a, 17b) which connect the first and second cage side rings (15a, 15b, 16a, 16b) associated with the respective cage (14a, 14b) in such a manner that pockets (18a, 18b), which are in each case defined by two adjacent webs (17a, 17b), one circumferential section (19a, 19b) of the first cage side ring (15a, 15b) and one circumferential section (20a, 20b) of the second cage side ring (16a, 16b), are realized for accommodating the balls (11a, 11b), and wherein a three-point snap-type device for holding the balls (11a, 11b) in the pocket (18a, 18b) is provided in the region of a pocket (18a, 18b) of the first and/or second cage (14a, 14b), said three-point snap-type device being formed by two points (32a, 32b, 33a, 33b) of the first cage side ring (15a, 15b) and by one point (34a, 34b) of the second cage side ring (16a, 16b) and allowing the balls (11a, 11b) to be inserted into the pocket (18a, 18b) by resilient deforming in the region of the two points (32a, 32b, 33a, 33b) of the first cage side ring (15a, 15b) and of the one point (34a, 34b) of the second cage side ring (16a, 16b).

2. Multiple-row ball bearing arrangement according to Claim 1, **characterized in that** the circumferential section (19a, 19b) of the first cage side ring (15a, 15b) and the circumferential section (20a, 20b) of the second cage side ring (16a, 16b) of the first and/or second cage (14a, 14b) are arranged completely on different sides of a graduated circle surface (22a, 22b) of the ball row (10a, 10b) associated with the cage (14a, 14b) and do not touch the graduated circle surface(22a, 22b).

3. Multiple-row ball bearing arrangement according to Claim 1 or 2, **characterized in that** the circumferential section (19a, 19b) of the first cage side ring (15a, 15b) and the circumferential section (20a, 20b) of the second cage side ring (16a, 16b) of the first and/or second cage (14a, 14b) are arranged substantially opposite each other with reference to the mid-point (12a, 12b) of a ball (11a, 11b) of the ball row (10a, 10b) associated with the cage (14a, 14b).

4. Multiple-row ball bearing arrangement according to one of the preceding claims, **characterized in that** the circumferential section (19a) of the first cage side ring (15a) of the first cage (14a) and the circumferential section (20b) of the second cage side ring (16b) of the second cage (14b) are both arranged completely on the same side of the graduated circle surface (22a) of the first ball row (10a) and are both arranged completely on the same side of the graduated circle surface (22b) of the second ball row (10b).

5. Multiple-row ball bearing arrangement according to one of the preceding claims, **characterized in that** the graduated circle (21b) of the second ball row (10b) has a larger diameter than the graduated circle (21a) of the first ball row (10a).

6. Multiple-row ball bearing arrangement according to one of the preceding claims, **characterized in that** the cage side rings (15a, 15b, 16a, 16b) of the first and of the second cage (14a, 14b) are realized in the shape of an annulus and **in that** the first cage side ring (15a) of the first cage (14a) has a larger inner and outer diameter than the second cage side ring (16a) of the first cage (14a) and/or **in that** the first cage side ring (15b) of the second cage (14b) has a larger inner and outer diameter than the second cage side ring (16b) of the second cage (14b).

7. Multiple-row ball bearing arrangement according to Claim 6, **characterized in that** the first cage side ring (15a) of the first cage (14a) has an inner diameter which is larger than the outer diameter of the second cage side ring (16b) of the second cage (14b).

8. Multiple-row ball bearing arrangement according to one of the preceding claims, **characterized in that** the first cage side ring (15a) of the first cage (14a) has an axial defining surface (23a) which points in the direction of the second ball row (10b) and forms part of a toroidal surface and/or **in that** the second cage side ring (16b) of the second cage (14b) has an axial defining surface (23b) which points in the direction of the first ball row (10a) and forms part of another toroidal surface.

9. Multiple-row ball bearing arrangement according to one of the preceding claims, **characterized in that** a pocket (18a, 18b) has a defining surface (25a, 25b) which faces a ball (11a, 11b) accommodated in the pocket (18a, 18b) and is formed from sections (26a, 26b, 27a, 27b) of a conical surface and sections (28a, 28b, 29a, 29b) of a cylindrical surface which are connected together.

10. Multiple-row ball bearing arrangement according to one of the preceding claims, **characterized in that** the multiple-row ball bearing arrangement (1) is realized as a multiple-row angular-contact ball bearing, in particular as a two-row tandem angular-contact ball bearing, with an inner bearing ring (2) and an outer bearing ring (3), or **in that** the multiple-row ball bearing arrangement (1) is realized as a tandem arrangement of a plurality of, in particular two, single-row angular-contact ball bearings.

11. Multiple-row ball bearing arrangement according to one of the preceding claims, **characterized in that** a ball (11a) of the first ball row (10a) has a diameter which is different from a diameter of a ball (11b) of the second ball row (10b).

12. Multiple-row ball bearing arrangement according to one of the preceding claims, **characterized in that** the clearance between rows (37) between the first and the second ball row (10a, 10b), measured in the direction of the longitudinal axis (AX), between the mid-points (12a, 12b) of a ball (11a) of the first ball row (10a) and of a ball (11b) of the second ball row (10b), is smaller than the sum of the radii (13a, 13b) of said two balls (11a, 11b).

13. Single-row or multiple-row ball bearing arrangement, having at least one inner bearing ring (2) and at least one outer bearing ring (3), which are arranged coaxially on a longitudinal axis (AX); having a plurality of balls (11a) which are arranged between the at least one inner and the at least one outer bearing ring (2, 3) in at least one ball row (10a); having at least one cage (14a) for guiding the balls (11a); wherein the cage (14a) has a first and a second cage side ring (15a, 16a); wherein the cage (14a) has a plurality of webs (17a) which connect the first and second cage side rings (15a, 16a) in such a manner that pockets (18a), which are in each case defined by two adjacent webs (17a), one circumferential section (19a) of the first cage side ring (15a) and one circumferential section (20a) of the second cage side ring (16a), are realized for accommodating the balls (11a); wherein the circumferential section (19a) of the first cage side ring (15a) and the circumferential section (20a) of the second cage side ring (16a) of the cage (14a) are arranged completely on different sides of a graduated circle surface (22a) of the ball row (10a) associated with the cage (14a) and do not touch the graduated circle surface (22a); and wherein a three-point snap-type device for holding the balls (11a) in the pocket (18a) is provided in the region of a pocket (18a) of the cage (14a), said three-point snap-type device being formed by two points (32a, 33a) of the first cage side ring (15a) and by one point (34a) of the second cage side ring (16a) and allowing the balls (11a) to be inserted into the pocket (18a) through resilient deforming in the region of the two points (32a, 33a) of the first cage side ring (15a) and of the one point (34a) of the second cage side ring (16a).

## Revendications

1. Agencement de roulement à billes à plusieurs rangées (1),
comprenant au moins une bague de palier interne (2) et au moins une bague de palier externe (3) qui sont disposées coaxialement sur un axe longitudinal (AX) ;
comprenant plusieurs billes (11a, 11b) disposées entre l'au moins une bague de palier interne et l'au moins une bague de palier externe (2, 3) dans au moins une première rangée de billes (10a) et une deuxième rangée de billes (10b) adjacente à la première rangée de billes (10a) ;
comprenant une première cage (14a) pour guider les billes (11a) de la première rangée de billes (10a), et une deuxième cage (14b) pour guider les billes (11b) de la deuxième rangée de billes (10b) ;
la première et la deuxième cage (14a, 14b) présentant à chaque fois une première et une deuxième bague latérale de cage (15a, 15b, 16a, 16b) ;
la première bague latérale de cage (15a) de la première cage (14a) et la deuxième bague latérale de cage (16b) de la deuxième cage (14b) étant disposées de manière adjacente l'une à l'autre et de manière à se chevaucher au moins en partie le long de l'axe longitudinal (AX) ;
la première et/ou la deuxième cage (14a, 14b) présentant à chaque fois plusieurs nervures (17a, 17b) qui relient les première et deuxième bagues latérales de cage (15a, 15b, 16a, 16b) associées à la cage respective (14a, 14b) de telle sorte que des cavités (18a, 18b) soient réalisées pour recevoir les billes (11a, 11b), lesquelles cavités étant à chaque fois limitées par deux nervures adjacentes (17a, 17b), une portion périphérique (19a, 19b) de la première bague latérale de cage (15a, 15b) et une portion périphérique (20a, 20b) de la deuxième bague latérale de cage (16a, 16b), et
un dispositif d'encliquetage à trois points formé par deux points (32a, 32b, 33a, 33b) de la première bague latérale de cage (15a, 15b) et par un point (34a, 34b) de la deuxième bague latérale de cage (16a, 16b) étant prévu dans la région d'une cavité (18a, 18b) de la première et/ou de la deuxième cage (14a, 14b) pour retenir les billes (11a, 11b) dans la cavité (18a, 18b), lequel dispositif permet d'insérer les billes (11a, 11b) dans la cavité (18a, 18b) par déformation élastique dans la région des deux points (32a, 32b, 33a, 33b) de la première bague latérale de cage (15a, 15b) et du point (34a, 34b) de la deuxième bague latérale de cage (16a, 16b).

2. Agencement de roulement à billes à plusieurs rangées selon la revendication 1, **caractérisé en ce que** la portion périphérique (19a, 19b) de la première bague latérale de cage (15a, 15b) et la portion périphérique (20a, 20b) de la deuxième bague latérale de cage (16a, 16b) de la première et/ou de la deuxième cage (14a, 14b) sont disposées complètement sur des côtés différents d'une surface de cercle partiel (22a, 22b) de la rangée de billes (10a, 10b) associée à la cage (14a, 14b) et ne sont pas en contact avec la surface de cercle partiel (22a, 22b).

3. Agencement de roulement à billes à plusieurs rangées selon la revendication 1 ou 2, **caractérisé en ce que** la portion périphérique (19a, 19b) de la première bague latérale de cage (15a, 15b) et la portion périphérique (20a, 20b) de la deuxième bague latérale de cage (16a, 16b) de la première et/ou de la deuxième cage (14a, 14b) sont disposées essentiellement à l'opposé l'une de l'autre par rapport au centre (12a, 12b) d'une bille (11a, 11b) de la rangée de billes (10a, 10b) associée à la cage (14a, 14b).

4. Agencement de roulement à billes à plusieurs rangées selon l'une quelconque des revendications précédentes, **caractérisé en ce que** la portion périphérique (19a) de la première bague latérale de cage (15a) de la première cage (14a) et la portion périphérique (20b) de la deuxième bague latérale de cage (16b) de la deuxième cage (14b) sont toutes deux disposées complètement du même côté de la surface de cercle partiel (22a) de la première rangée de billes (10a) et sont toutes deux disposées du même côté de la surface de cercle partiel (22b) de la deuxième rangée de billes (10b).

5. Agencement de roulement à billes à plusieurs rangées selon l'une quelconque des revendications précédentes, **caractérisé en ce que** le cercle partiel (21b) de la deuxième rangée de billes (10b) présente un plus grand diamètre que le cercle partiel (21a) de la première rangée de billes (10a).

6. Agencement de roulement à billes à plusieurs rangées selon l'une quelconque des revendications précédentes, **caractérisé en ce que** les bagues latérales de cage (15a, 15b, 16a, 16b) de la première et de la deuxième cage (14a, 14b) sont réalisées sous forme annulaire circulaire et **en ce que** la première bague latérale de cage (15a) de la première cage (14a) présente un plus grand diamètre intérieur et un plus grand diamètre extérieur que la deuxième bague latérale de cage (16a) de la première cage (14a) et/ou **en ce que** la première bague latérale de cage (15b) de la deuxième cage (14b) présente un plus grand diamètre intérieur et un plus grand diamètre extérieur que la deuxième bague latérale de cage (16b) de la deuxième cage (14b).

7. Agencement de roulement à billes à plusieurs rangées selon la revendication 6, **caractérisé en ce que** la première bague latérale de cage (15a) de la première cage (14a) présente un diamètre intérieur qui est supérieur au diamètre extérieur de la deuxième bague latérale de cage (16b) de la deuxième cage (14b).

8. Agencement de roulement à billes à plusieurs rangées selon l'une quelconque des revendications précédentes, **caractérisé en ce que** la première bague latérale de cage (15a) de la première cage (14a) présente une surface de limitation axiale (23a) tournée dans la direction de la deuxième rangée de billes (10b), laquelle forme une partie d'une surface toroïdale et/ou **en ce que** la deuxième bague latérale de cage (16b) de la deuxième cage (14b) présente une surface de limitation axiale (23b) tournée dans la direction de la première rangée de billes (10a), laquelle forme une partie d'une autre surface toroïdale.

9. Agencement de roulement à billes à plusieurs rangées selon l'une quelconque des revendications précédentes, **caractérisé en ce qu'**une cavité (18a, 18b) présente une surface de limitation (25a, 25b) tournée vers une bille (11a, 11b) reçue dans la cavité (18a, 18b), laquelle surface de limitation est formée de portions se raccordant les unes aux autres (26a, 26b, 27a, 27b) d'une surface sphérique et de portions (28a, 28b, 29a, 29b) d'une surface cylindrique.

10. Agencement de roulement à billes à plusieurs rangées selon l'une quelconque des revendications précédentes, **caractérisé en ce que** l'agencement de roulement à billes à plusieurs rangées (1) est réalisé sous forme de roulement à billes à contact oblique à plusieurs rangées avec une bague de palier interne (2) et une bague de palier externe (3), en particulier en tant que roulement à billes à contact oblique en tandem à deux rangées ou **en ce que** l'agencement de roulement à billes à plusieurs rangées (1) est réalisé sous forme d'agencement en tandem de plusieurs, en particulier de deux, roulements à billes à contact oblique à une rangée.

11. Agencement de roulement à billes à plusieurs rangées selon l'une quelconque des revendications précédentes, **caractérisé en ce qu'**une bille (11a) de la première rangée de billes (10a) présente un diamètre différent d'un diamètre d'une bille (11b) de la deuxième rangée de billes (10b).

12. Agencement de roulement à billes à plusieurs rangées selon l'une quelconque des revendications précédentes, **caractérisé en ce que** la distance entre les rangées (37) de la première et de la deuxième rangée de billes (10a, 10b), mesurée dans la direction de l'axe longitudinal (AX), entre les centres (12a, 12b) d'une bille (11a) de la première rangée de billes (10a) et d'une bille (11b) de la deuxième rangée de billes (10b), est inférieure à la somme des rayons (13a, 13b) de ces deux billes (11a, 11b).

13. Agencement de roulement à billes à une ou plusieurs rangées,
comprenant au moins une bague de palier interne (2) et au moins une bague de palier externe (3) qui sont disposées coaxialement sur un axe longitudinal (AX) ;
comprenant plusieurs billes (11a) disposées entre l'au moins une bague de palier interne et l'au moins une bague de palier externe (2, 3) dans au moins une rangée de billes (10a) ;
comprenant au moins une cage (14a) pour guider les billes (11a) ;
la cage (14a) présentant une première bague latérale de cage et une deuxième bague latérale de cage (15a, 16a) ;
la cage (14a) présentant plusieurs nervures (17a) qui relient la première et la deuxième bague latérale de cage (15a, 16a) de telle sorte que des cavités (18a) soient réalisées pour recevoir les billes (11a), lesquelles cavités étant à chaque fois limitées par deux nervures adjacentes (17a), une portion périphérique (19a) de la première bague latérale de cage (15a) et une portion périphérique (20a) de la deuxième bague latérale de cage (16a) ;
la portion périphérique (19a) de la première bague latérale de cage (15a) et la portion périphérique (20a) de la deuxième bague latérale de cage (16a) de la cage (14a) étant disposées complètement sur des côtés différents d'une surface de cercle partiel (22a) de la rangée de billes (10a) associée à la cage (14a) et n'étant pas en contact avec la surface de cercle partiel (22a) ; et
un dispositif d'encliquetage à trois points formé par deux points (32a, 33a) de la première bague latérale de cage (15a) et par un point (34a) de la deuxième bague latérale de cage (16a) étant prévu dans la région d'une cavité (18a) de la cage (14a) pour retenir les billes (11a) dans la cavité (18a), lequel dispositif permet d'insérer les billes (11a) dans la cavité (18a) par déformation élastique dans la région des deux points (32a, 33a) de la première bague latérale de cage (15a) et du point (34a) de la deuxième bague latérale de cage (16a).
